(19) Europäisches Patentamt
European Patent Office
Office européen des brevets

(11) **EP 3 146 734 B1**

(12) **FASCICULE DE BREVET EUROPEEN**

(45) Date de publication et mention de la délivrance du brevet:
**23.10.2019 Bulletin 2019/43**

(21) Numéro de dépôt: **15730073.2**

(22) Date de dépôt: **22.05.2015**

(51) Int Cl.:
*H04L 5/14* (2006.01)   *H04W 76/45* (2018.01)
*H04L 29/06* (2006.01)   *H04W 4/10* (2009.01)

(86) Numéro de dépôt international:
**PCT/EP2015/061426**

(87) Numéro de publication internationale:
**WO 2015/177350 (26.11.2015 Gazette 2015/47)**

(54) **PROCÉDÉ DE GESTION DE PRISE DE PAROLE SUR UN CANAL DE COMMUNICATION DANS LE CADRE DE COMMUNICATIONS EN ALTERNAT**

VERFAHREN ZUR VERWALTUNG DER SPRECHREIHENFOLGE ÜBER EINEN KOMMUNIKATIONSKANAL IM ZUSAMMENHANG MIT SIMPLEX-ANRUFEN

METHOD FOR MANAGING SPEAKING TURNS OVER A COMMUNICATION CHANNEL IN THE CONTEXT OF SIMPLEX CALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2014 FR 1454670**

(43) Date de publication de la demande:
**29.03.2017 Bulletin 2017/13**

(73) Titulaire: **Airbus Defence and Space SAS 78130 Les Mureaux (FR)**

(72) Inventeurs:
• **VENTURA JAUME, Joan**
  **F-31402 Toulouse Cedex 4 (FR)**
• **FRANCK, Laurent**
  **F-31400 Toulouse (FR)**

(74) Mandataire: **Cabinet Le Guen Maillet 3, impasse de la Vigie CS 71840 35418 Saint-Malo Cedex (FR)**

(56) Documents cités:
**US-A1- 2010 261 494    US-B1- 7 684 818**

**Description**

La présente invention concerne une gestion de prise de parole sur un canal de communication partagé dans le cadre de communications en alternat implémentées dans un réseau de communication composé d'une pluralité de sous-réseaux interconnectés.

Les systèmes de communication en alternat PTT (« Push-To-Talk » en anglais) sont très répandus, notamment dans le cadre des communications dans des milieux professionnels par des services de sécurité (police, pompiers), les entreprises de bâtiments et travaux publics, et l'industrie. Les systèmes de communication de type PTT implémentent une méthode de conversation de type « half-duplex » (en anglais) sur un canal de communication partagé, c'est-à-dire que la communication se passe dans les deux sens, mais pas simultanément. Les systèmes de communication de type PTT mettent en oeuvre des mécanismes MAC (« Medium Access Control » en anglais) au niveau de la couche liaison (« link layer » en anglais) permettant une mise en oeuvre de conversations entre utilisateurs disposant de dispositifs terminaux interconnectés par un réseau de communication, de telle sorte qu'un seul utilisateur ne parle à la fois, les autres utilisateurs étant alors à l'écoute de celui ayant pris la parole.

De manière à assurer qu'un seul dispositif de communication prenne la parole sur le canal de communication partagé, divers mécanismes sont connus. Il est notamment connu un mécanisme appelé « Floor Control » en anglais, implémenté au niveau de la couche application (« application layer » en anglais). Un tel mécanisme de « Floor Control » est ainsi applicable à une transmission de données audio, mais aussi à une transmission de données vidéo, voire de données audio-vidéo ou de données d'un autre type.

Un tel mécanisme de « Floor Control » repose typiquement sur la mise en oeuvre d'un serveur auprès duquel chaque dispositif terminal doit requérir une autorisation avant de pouvoir prendre la parole. Ce serveur est alors en charge de gérer les conflits de requêtes de prise de parole, c'est-à-dire de gérer les situations dans lesquelles plusieurs dispositifs terminaux requièrent des prises de paroles respectives concurrentes.

En pratique, un dispositif terminal souhaitant prendre la parole envoie au serveur une requête de prise de parole (« Floor Request » en anglais). Ce souhait de prendre la parole émane typiquement d'un utilisateur par un appui sur un bouton dédié du dispositif terminal. Le serveur réceptionne ladite requête et sélectionne le dispositif terminal à qui la prise de parole est accordée parmi d'éventuelles requêtes concurrentes qui lui sont adressées. Le serveur envoie un message de confirmation d'autorisation de prise de parole (« Floor Grant » en anglais) au dispositif terminal qui a été sélectionné et un message de notification représentatif de ladite confirmation d'autorisation (« Floor Taken » en anglais) aux autres dispositifs terminaux, qui passent alors à l'écoute du dispositif terminal auquel la prise de parole a été accordée. Le dispositif terminal auquel la prise de parole a été accordée peut alors prendre la parole et les autres dispositifs terminaux sont invités à attendre la libération de la communication pour émettre une requête de prise de parole. Lorsque le dispositif terminal auquel la prise de parole a été accordée en a terminé avec la communication, ledit dispositif terminal envoie au serveur une demande de libération de parole (« Floor Release » en anglais). Le serveur avertit alors les autres dispositifs terminaux que la communication a été libérée, et qu'une nouvelle prise de parole peut être mise en oeuvre.

Le réseau de communication peut être composé d'une pluralité de sous-réseaux interconnectés par un lien de communication, *e.g.* une liaison satellite, impliquant une grande latence de transmission entre lesdits sous-réseaux. Cette latence de transmission n'est pas négligeable notamment au vu des latences de transmission au sein des sous-réseaux. A cause de cette latence de transmission, le serveur peut alors typiquement avoir à attendre de longues périodes de temps après avoir reçu une requête de prise de parole pour déterminer si une ou plusieurs requêtes concurrentes existent, notamment en provenance d'un autre sous-réseau que celui d'où provient la requête de prise de parole reçue. Si le serveur n'attend pas de telles périodes de temps avant de décider à quel dispositif terminal accorder la prise de parole, les dispositifs terminaux les plus proches en termes de latence du serveur sont favorisés et le mécanisme de « Floor Control » est inéquitable (« unfair » en anglais). Les sous-réseaux peuvent en outre impliquer des latences de transmission très différentes.

Il est alors souhaitable, dans ces circonstances, de fournir une solution qui soit équitable quelle que soit la localisation, dans le réseau de communication, du dispositif terminal émettant une requête de prise de parole. Il est en outre souhaitable de fournir une solution qui réduit le temps d'accès à la prise de parole, c'est-à-dire la période de temps entre l'instant auquel un dispositif terminal requiert la prise de parole et l'instant auquel ledit dispositif terminal obtient effectivement l'autorisation de prendre la parole, tout en limitant le risque de ne pas respecter la chronologie de tentative de prise de parole effective (*i.e.* le risque qu'un utilisateur X ayant chronologiquement tenté de parler avant un utilisateur Y ne soit entendu par au moins un autre utilisateur Z après l'utilisateur Y).

Il est aussi souhaitable de fournir une solution dans laquelle, lorsqu'un dispositif terminal a obtenu effectivement l'autorisation de prendre la parole, les données transmises par ledit dispositif terminal dans le cadre de la prise de parole sont reçues substantiellement simultanément par les dispositifs terminaux à l'écoute.

Il est aussi souhaitable de fournir une solution qui soit simple à mettre en oeuvre et à faible coût. L'état antérieur de la technique est décrit par exemple dans les documents US 2010/261494 A1 et US 7 684 818 B1.

L'invention est définie dans les revendications 1 à 17. L'invention concerne un procédé de gestion de prise de parole sur un canal de communication partagé dans le cadre de communications en alternat implémentées dans un réseau de communication composé d'une pluralité de sous-réseaux interconnectés, chaque sous-réseau étant associé à un dispositif super-noeud du réseau de communication, le procédé étant mis en oeuvre par un dit dispositif super-noeud. Lorsqu'une première requête de prise de parole est reçue d'un dispositif terminal du sous-réseau auquel ledit dispositif super-noeud est associé et que ledit dispositif super-noeud n'a pas connaissance d'au moins une seconde requête de prise de parole plus prioritaire, ledit dispositif super-noeud effectue les étapes suivantes : propager la première requête de prise de parole à chaque autre dispositif super-noeud ; transmettre un message de pré-autorisation de prise de parole audit dispositif terminal de sorte à autoriser ledit dispositif terminal à prendre la parole ; transmettre un message de notification de pré-autorisation de prise de parole à chaque autre dispositif terminal du sous-réseau auquel le dispositif super-noeud est associé, de sorte à placer chaque dit autre dispositif terminal à l'écoute du canal de communication partagé ; déterminer une durée d'une temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un premier seuil prédéfini ; stocker dans une mémoire tampon des données reçues en provenance dudit dispositif terminal dans le cadre de la prise de parole, et propager lesdites données à destination de chaque autre dispositif super-noeud ; activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque la première requête de prise de parole est reçue d'un dispositif terminal d'un autre sous-réseau que celui auquel ledit dispositif super-noeud est associé et que ledit dispositif super-noeud n'a pas connaissance d'au moins une seconde requête de prise de parole plus prioritaire, ledit dispositif super-noeud effectue les étapes suivantes : transmettre un message de notification de pré-autorisation de prise de parole à chaque dispositif terminal du sous-réseau auquel le dispositif super-noeud est associé, de sorte à placer chaque dispositif terminal dudit sous-réseau à l'écoute du canal de communication partagé ; déterminer la durée de la temporisation en fonction de la loi de distribution $f_\tau(t)$ et de la loi de distribution $f_\delta(d)$, de sorte que la probabilité $P_{fail}$ de destituer ledit dispositif terminal de la prise de parole soit en dessous du premier seuil prédéfini ; stocker dans la mémoire tampon des données propagées par un autre dispositif super-noeud dans le cadre de la prise de parole ; activer en lecture la mémoire tampon pour diffuser les données stockées à chaque dispositif terminal à l'écoute sur le sous-réseau associé audit dispositif super-noeud, lorsque ladite temporisation est écoulée. En outre, lorsque ledit dispositif super-noeud détecte au moins une seconde requête de prise de parole plus prioritaire avant expiration de ladite temporisation, ledit dispositif super-noeud libère la mémoire tampon et, lorsque ladite première requête a été reçue en provenance d'un dispositif terminal du sous-réseau auquel est associé ledit dispositif super-noeud, ledit dispositif super-noeud notifie ledit dispositif terminal que la prise de parole est refusée audit dispositif terminal.

Selon un mode réalisation particulier, ledit dispositif super-noeud transmet le message de pré-autorisation de prise de parole après expiration d'une autre temporisation de durée déterminée en fonction de la loi de distribution $f_\tau(t)$ et de la loi de distribution $f_\delta(d)$, de sorte que la probabilité de destituer ledit dispositif terminal de la prise de parole soit en dessous d'un second seuil prédéfini strictement supérieur audit premier seuil.

Selon un mode réalisation particulier, la loi de distribution $f_\tau(t)$ est définie par un modèle de type log-normal et exprimée de la manière suivante :

$$f_\tau(t) = \frac{1}{t\,\sigma\,\sqrt{2\pi}}\,e^{-\frac{(log(t)-\mu)^2}{2\sigma^2}}$$

où $\sigma$ représente l'écart type de la loi de distribution $f_\tau(t)$ et $\mu$ représente la moyenne de la loi de distribution $f_\tau(t)$.

Selon un mode réalisation particulier, la loi de distribution $f_\delta(d)$ est définie par un modèle sous la forme d'une mixture de lois de distribution de Weibull à trois paramètres et exprimée de la manière suivante :

$$f_\delta(d) = \sum_i q_i f_{\delta_i}(d)$$

où $i$ est un index sur les composantes de la mixture et où $q_i$ représente des coefficients de pondération tels que:

$$\sum_i q_i = 1$$

et où :

$$f_{\delta_i}(d) = \frac{s_i}{r_i}\left(\frac{d-l_i}{r_i}\right)^{s_i-1} e^{-\left(\frac{d-l_i}{r_i}\right)^{s_i}}$$

pour $d \geq l_i$ où $s_i$ est un paramètre de forme, $r_i$ un paramètre d'échelle et $l_i$ un paramètre de localisation.

Selon un mode réalisation particulier, les lois de distribution $f_\tau(t)$ et $f_\delta(d)$ sont prédéterminées par ledit dispositif super-noeud en fonction de statistiques long-terme précédemment recueillies au fil d'échanges de messages dans le cadre des communications en alternat.

Selon un mode réalisation particulier, la probabilité $P_{fail}$ de destituer ledit dispositif terminal de la prise de parole est exprimée de la manière suivante :

$$P_{fail} = 1 - \sum_{k=0}^{N-1} \binom{N-1}{k} P_{push}{}^k \left(1 - P_{push}\right)^{N-1-k} \left(1 - P'_{fail}\right)^k$$

où $P_{push}$ représente la probabilité pour un dispositif terminal de requérir la prise de parole déterminée par ledit dispositif super-noeud en comptant le nombre de requêtes de prise de parole concurrentes détectées pour chaque prise de parole accordée, soit :

$$P_{push} = \left(\sum_{q=1}^{Q} \frac{R_q - 1}{N - 1}\right)/Q$$

où $R_q$ représente une quantité de requêtes concurrentes reçues pour chaque prise de parole accordée $q$ avec $R_q \geq 1$ et où $Q$ représente une quantité de prises de parole accordées considérée ;
et où :

$$P'_{fail} = \frac{Prob\{T_1 + d_1 + T_b < T_2 + d_2 \ \& \ T_1 > T_2\}}{Prob\{T_1 + d_1 < T_2 + d_2 \& T_1 > T_2\} + Prob\{T_1 + d_1 < T_2 + d_2 \& T_1 < T_2\}}$$

où : $Prob\{x\}$ représente la probabilité qu'une expression représentée par $x$ soit vérifiée et où $T_1$ est représentatif d'un instant auquel ladite première requête de prise de parole a été transmise, $T_2$ est représentatif de l'instant auquel une seconde requête de prise de parole plus prioritaire a été transmise, $d_1$ est représentatif d'une latence de transmission subie par ladite première requête de prise de parole dans le réseau de communication, $d_2$ est représentatif d'une latence de transmission subie par ladite seconde requête de prise de parole dans le réseau de communication, et $T_b$ est représentatif de la durée de la temporisation dont l'expiration déclenche la lecture de ladite mémoire tampon.

Selon un mode réalisation particulier, chaque requête de prise de parole inclut une information représentative d'une période de temps écoulée entre un instant auquel un message de libération de parole a été reçu dans le cadre de la dernière prise de parole par le dispositif terminal ayant transmis ladite requête de prise de parole et l'instant auquel ledit dispositif terminal a transmis ladite requête.

Selon un mode réalisation particulier, ledit dispositif super-noeud considère qu'une dite seconde requête de prise de parole est temporellement plus prioritaire que ladite première requête de prise de parole lorsque la période de temps représentée par ladite information incluse dans ladite seconde requête de prise de parole est inférieure à ladite période de temps représentée par ladite information incluse dans ladite première requête de prise de parole.

Selon un mode réalisation particulier, pour déterminer la durée de ladite temporisation, le dispositif super-noeud effectue les étapes suivantes : déterminer une période de temps t écoulée entre un instant auquel un message de libération de parole a été reçu dans le cadre de la dernière prise de parole par le dispositif terminal ayant transmis ladite première requête de prise de parole et l'instant auquel ledit dispositif terminal a transmis ladite première requête de prise de parole ; déterminer une latence d subie par ladite première requête de prise de parole entre la transmission de ladite première requête de prise de parole par ledit dispositif terminal et la réception de ladite première requête de prise de parole par ledit dispositif super-noeud ; et déterminer la durée de ladite temporisation à partir d'une table de correspondance qui fournit une durée de temporisation en fonction d'un ensemble de couples $(t, d)$ prédéfinis, le contenu de la table de correspondance étant préalablement défini en fonction de la loi de distribution $f_\tau(t)$ et de la loi de distribution $f_\delta(d)$ concernée de sorte que la probabilité $P_{fail}$ de destituer un dispositif terminal de la prise de parole soit en dessous du premier seuil prédéfini.

Selon un mode réalisation particulier, pour remplir la table de correspondance, un dispositif effectue les étapes suivantes : déterminer des paramètres permettant de représenter la loi de distribution $f_\tau(t)$ ; déterminer des paramètres permettant de représenter la loi de distribution $f_\delta(d)$ applicable ; déterminer une quantité de dispositifs terminaux présents dans le système de communication ; définir des valeurs minimum et maximum de période de temps $t$ entre une libération de parole et une prochaine prise de parole, et de latence réseau $d$ entre un instant auquel une requête de prise de parole est transmise par un dispositif terminal et un instant auquel ladite requête est effectivement reçue par ledit dispositif super-noeud ; définir un pas entre deux valeurs de période de temps $t$ successives à considérer et d'un pas entre deux valeurs de latence réseau $d$ successives à considérer, de manière à définir chaque couple $(t, d)$ à représenter dans la table de correspondance ; définir une valeur maximum acceptable pour la durée de la temporisation ; définir la valeur dudit premier seuil ; définir une marge d'erreur $\varepsilon$ acceptable ; déterminer par bissection, en fonction des lois de distribution $f_\tau(t)$ et $f_\delta(d)$, une durée de temporisation pour chaque couple $(t, d)$ à représenter dans la table de correspondance, de telle sorte que de sorte que la probabilité $P_{fail}$ de destituer un dispositif terminal de la prise de parole soit à une distance du premier seuil prédéfini inférieure à ladite marge d'erreur $\varepsilon$ acceptable et que la durée de temporisation soit inférieure à ladite valeur maximum acceptable.

Selon un mode réalisation particulier, lorsqu'un message de libération de parole est reçu dudit dispositif terminal et que ledit dispositif terminal est sur le sous-réseau auquel ledit dispositif super-noeud est associé, ledit dispositif super-noeud effectue les étapes suivantes : propager ledit message de libération de parole reçu à chaque autre dispositif super-noeud ; transmettre un message de notification de libération de parole à chaque autre dispositif terminal du sous-réseau auquel le dispositif super-noeud est associé, après que la mémoire tampon ait été vidée ; et libérer la mémoire tampon ; et lorsqu'un message de libération de parole est reçu dudit dispositif terminal et que ledit dispositif terminal est sur un autre sous-réseau que celui auquel ledit dispositif super-noeud est associé, ledit dispositif super-noeud effectue les étapes suivantes : transmettre un message de notification de libération de parole à chaque dispositif terminal du sous-réseau auquel le dispositif super-noeud est associé, après que la mémoire tampon ait été vidée ; et libérer la mémoire tampon.

Selon un mode réalisation particulier, différentes configurations du réseau de communication étant possibles, ledit dispositif super-noeud sélectionne la loi de distribution $f_\tau(t)$ et la loi de distribution $f_\delta(d)$ parmi un ensemble prédéfini de lois de distribution, en fonction d'une configuration effective du réseau de communication.

L'invention concerne également un procédé de gestion de prise de parole sur un canal de communication partagé dans le cadre de communications en alternat implémentées dans un réseau de communication composé d'une pluralité de sous-réseaux interconnectés, chaque sous-réseau étant associé à un dispositif super-noeud du réseau de communication, le procédé étant mis en oeuvre par un dit dispositif super-noeud. Lorsqu'une première requête de prise de parole est reçue d'un dispositif terminal du sous-réseau auquel ledit dispositif super-noeud est associé et que ledit dispositif super-noeud n'a pas connaissance d'au moins une seconde requête de prise de parole plus prioritaire, ledit dispositif super-noeud effectue les étapes suivantes : propager la première requête de prise de parole à chaque autre dispositif super-noeud ; transmettre un message de pré-autorisation de prise de parole audit dispositif terminal de sorte à autoriser ledit dispositif terminal à prendre la parole ; transmettre un message de notification de pré-autorisation de prise de parole à chaque autre dispositif terminal du sous-réseau auquel le dispositif super-noeud est associé, de sorte à placer chaque dit autre dispositif terminal à l'écoute du canal de communication partagé ; déterminer une durée d'une temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ; stocker dans une mémoire tampon des données reçues en provenance dudit dispositif terminal dans le cadre de la prise de parole, et propager lesdites données à destination de chaque autre dispositif super-noeud ; et activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque ledit dispositif super-noeud détecte au moins une seconde requête de prise de parole plus prioritaire avant expiration de ladite temporisation, ledit dispositif super-noeud effectue les étapes suivantes : libérer la mémoire tampon ; et notifier ledit dispositif terminal que la prise de parole est refusée audit dispositif terminal.

L'invention concerne également un procédé de gestion de prise de parole sur un canal de communication partagé dans le cadre de communications en alternat implémentées dans un réseau de communication composé d'une pluralité de sous-réseaux interconnectés, chaque sous-réseau étant associé à un dispositif super-noeud du réseau de communication, le procédé étant mis en oeuvre par un dit dispositif super-noeud. Lorsqu'une première requête de prise de parole est reçue d'un dispositif terminal d'un autre sous-réseau que celui auquel ledit dispositif super-noeud est associé et que ledit dispositif super-noeud n'a pas connaissance d'au moins une seconde requête de prise de parole plus prioritaire, ledit dispositif super-noeud effectue les étapes suivantes : transmettre un message de notification de pré-autorisation de prise de parole à chaque dispositif terminal du sous-réseau auquel le dispositif super-noeud est associé, de sorte à placer chaque dispositif terminal dudit sous-réseau à l'écoute du canal de communication partagé ; déterminer la durée de la temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ; stocker dans une mémoire tampon des données propagées par un autre dispositif super-noeud dans le cadre de la prise de parole ; activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque ledit dispositif super-noeud détecte au moins une seconde requête de prise de parole plus prioritaire avant expiration de ladite temporisation, ledit dispositif super-noeud libère la mémoire tampon.

L'invention concerne également un dispositif super-noeud destiné à une gestion de prise de parole sur un canal de communication partagé dans le cadre de communications en alternat implémentées dans un réseau de communication composé d'une pluralité de sous-réseaux interconnectés, chaque sous-réseau étant associé à un dispositif super-noeud du réseau de communication. Ledit dispositif super-noeud est tel que, lorsqu'une première requête de prise de parole est reçue d'un dispositif terminal du sous-réseau auquel ledit dispositif super-noeud est associé et que ledit dispositif super-noeud n'a pas connaissance d'au moins une seconde requête de prise de parole plus prioritaire, ledit dispositif super-noeud inclut : des moyens pour propager la première requête de prise de parole à chaque autre dispositif super-noeud ; des moyens pour transmettre un message de pré-autorisation de prise de parole audit dispositif terminal de sorte à autoriser ledit dispositif terminal à prendre la parole ; des moyens pour transmettre un message de notification de pré-autorisation de prise de parole à chaque autre dispositif terminal du sous-réseau auquel le dispositif super-noeud est associé, de sorte à placer chaque dit autre dispositif terminal à l'écoute du canal de communication partagé ; des moyens pour déterminer une durée d'une temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un premier seuil prédéfini ; des moyens pour stocker dans une mémoire tampon des données reçues en provenance dudit dispositif terminal dans le cadre de la prise de parole, et pour propager lesdites données à destination de chaque autre dispositif super-noeud ; des moyens pour activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque la première requête de prise de parole est reçue d'un dispositif terminal d'un autre sous-réseau que celui auquel ledit dispositif super-noeud est associé et que ledit dispositif super-noeud n'a pas connaissance d'au moins une seconde requête de prise de parole plus prioritaire, ledit dispositif super-noeud inclut : des moyens pour transmettre un message de notification de pré-autorisation de prise de parole à chaque dispositif terminal du sous-réseau auquel le dispositif super-noeud est associé, de sorte à placer chaque dispositif terminal dudit sous-réseau à l'écoute du canal de communication partagé ; des moyens pour déterminer la durée de la temporisation en fonction de la loi de distribution $f_\tau(t)$ et de la loi de distribution $f_\delta(d)$, de sorte que la probabilité $P_{fail}$ de destituer ledit dispositif terminal de la prise de parole soit en dessous du premier seuil prédéfini ; des moyens pour stocker dans la mémoire tampon des données propagées par un autre dispositif super-noeud dans le cadre de la prise de parole ; des moyens pour activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque ledit dispositif super-noeud détecte au moins une seconde requête de prise de parole plus prioritaire avant expiration de ladite temporisation, ledit dispositif super-noeud inclut des moyens pour libérer la mémoire tampon et, lorsque ladite première requête a été reçue en provenance d'un dispositif terminal du sous-réseau auquel est associé ledit dispositif super-noeud, ledit dispositif super-noeud inclut des moyens pour notifier ledit dispositif terminal que la prise de parole est refusée audit dispositif terminal.

L'invention concerne également un dispositif super-noeud destiné à une gestion de prise de parole sur un canal de communication partagé dans le cadre de communications en alternat implémentées dans un réseau de communication composé d'une pluralité de sous-réseaux interconnectés, chaque sous-réseau étant associé à un dispositif super-noeud du réseau de communication. Lorsqu'une première requête de prise de parole est reçue d'un dispositif terminal du sous-réseau auquel ledit dispositif super-noeud est associé et que ledit dispositif super-noeud n'a pas connaissance d'au moins une seconde requête de prise de parole plus prioritaire, ledit dispositif super-noeud inclut : des moyens pour propager la première requête de prise de parole à chaque autre dispositif super-noeud ; des moyens pour transmettre un message de pré-autorisation de prise de parole audit dispositif terminal de sorte à autoriser ledit dispositif terminal à prendre la parole ; des moyens pour transmettre un message de notification de pré-autorisation de prise de parole à chaque autre dispositif terminal du sous-réseau auquel le dispositif super-noeud est associé, de sorte à placer chaque dit autre dispositif terminal à l'écoute du canal de communication partagé ; des moyens pour déterminer une durée d'une temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ; des moyens pour stocker dans une mémoire tampon des données reçues en provenance dudit dispositif terminal dans le cadre de la prise de parole, et propager lesdites données à destination de chaque autre dispositif super-noeud ; et des moyens pour activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque ledit dispositif super-noeud détecte au moins une seconde requête de prise de parole plus prioritaire avant expiration de ladite temporisation, ledit dispositif super-noeud inclut : des moyens pour libérer la mémoire tampon ; et des moyens pour notifier ledit dispositif terminal que la prise de parole est refusée audit dispositif terminal.

L'invention concerne également un dispositif super-noeud destiné à une gestion de prise de parole sur un canal de communication partagé dans le cadre de communications en alternat implémentées dans un réseau de communication composé d'une pluralité de sous-réseaux interconnectés, chaque sous-réseau étant associé à un dispositif super-noeud du réseau de communication. Lorsqu'une première requête de prise de parole est reçue d'un dispositif terminal d'un autre sous-réseau que celui auquel ledit dispositif super-noeud est associé et que ledit dispositif super-noeud n'a pas connaissance d'au moins une seconde requête de prise de parole plus prioritaire, ledit dispositif super-noeud inclut : des moyens pour transmettre un message de notification de pré-autorisation de prise de parole à chaque dispositif terminal du sous-réseau auquel le dispositif super-noeud est associé, de sorte à placer chaque dispositif terminal dudit sous-réseau à l'écoute du canal de communication partagé ; des moyens pour déterminer la durée de la temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ; des moyens pour stocker dans une mémoire tampon des données propagées par un autre dispositif super-noeud dans le cadre de la prise de parole ; des moyens pour activer en lecture la mémoire tampon pour diffuser les données stockées à chaque dispositif terminal à l'écoute sur le sous-réseau associé audit dispositif super-noeud, lorsque ladite temporisation est écoulée. De plus, lorsque ledit dispositif super-noeud détecte au moins une seconde requête de prise de parole plus prioritaire avant expiration de ladite temporisation, ledit dispositif super-noeud inclut des moyens pour libérer la mémoire tampon.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de communication dans lequel la présente invention peut être mise en oeuvre ;
- la Fig. 2 illustre schématiquement un exemple d'architecture matérielle d'au moins un dispositif d'interconnexion du système de communication ;
- la Fig. 3 illustre schématiquement des premiers échanges dans le système de communication pour permettre à un dispositif terminal de prendre la parole dans le cadre d'un mécanisme de type PTT ;
- la Fig. 4 illustre schématiquement des seconds échanges dans le système de communication pour permettre au dispositif terminal de libérer volontairement la parole dans le cadre du mécanisme de type PTT ;
- la Fig. 5A illustre schématiquement un algorithme, mis en oeuvre par un premier dispositif d'interconnexion du système de communication, pour permettre au dispositif terminal de prendre la parole dans le cadre du mécanisme de type PTT ;
- la Fig. 5B illustre schématiquement un algorithme, mis en oeuvre par un second dispositif d'interconnexion du système de communication, pour permettre au dispositif terminal de prendre la parole dans le cadre du mécanisme de type PTT ;
- la Fig. 6A illustre schématiquement un algorithme, mis en oeuvre par le premier dispositif d'interconnexion, pour permettre au dispositif terminal de libérer volontairement la parole dans le cadre du mécanisme de type PTT ;
- la Fig. 6B illustre schématiquement un algorithme, mis en oeuvre par le second dispositif d'interconnexion, pour permettre au dispositif terminal de libérer volontairement la parole dans le cadre du mécanisme de type PTT ; et

- la Fig. 7 illustre schématiquement un algorithme, mis en oeuvre par un dispositif d'interconnexion du système de communication, de gestion d'un conflit de prise de parole dans le cadre du mécanisme de type PTT.

Pour permettre de réduire le temps d'accès à la prise de parole sur un canal de communication dans un réseau de communication, il est proposé d'organiser le réseau de communication en sous-réseaux interconnectés et de mettre en oeuvre un dispositif, appelé super-noeud SN, par sous-réseau. Un sous-réseau est un sous-ensemble du réseau de communication, un même sous-réseau pouvant mettre en oeuvre différentes technologies de communication et ainsi former un sous-réseau hybride.

Les sous-réseaux étant interconnectés, les dispositifs SN du réseau de communication sont alors aptes à communiquer entre eux grâce aux interconnexions entre les sous-réseaux. Le réseau de communication comporte une pluralité de dispositifs terminaux devant partager un canal de communication, chaque sous-réseau comportant au moins un tel dispositif terminal. Les dispositifs SN se coordonnent pour gérer la prise de parole sur le canal de communication partagé et servent ainsi de relais entre les dispositifs terminaux. Il est alors proposé qu'un dispositif SN recevant une requête de prise de parole en provenance d'un dispositif terminal du sous-réseau auquel ledit dispositif SN est associé transmette une autorisation de prise de parole anticipée, appelée pré-autorisation (« Floor Pre Grant » en anglais). Suite à cette pré-autorisation, ledit dispositif terminal transmet des données dans le cadre de la prise de parole ; ces données sont stockées par ledit dispositif SN dans une mémoire tampon avant d'être diffusées à des dispositifs terminaux dudit sous-réseau à l'écoute. Lorsque ledit dispositif SN reçoit lesdites données, ledit dispositif SN propage en outre lesdites données aux autres dispositifs SN du réseau de communication, qui mettent eux-aussi en oeuvre un stockage temporaire par mémoire tampon. Ce stockage temporaire entraîne une mise en attente, au niveau de chaque dispositif SN, de la diffusion desdites données pendant une période de temps qui est déterminée par chaque dispositif SN en fonction d'une loi de distribution de période de temps entre une libération de parole et une prochaine prise de parole (i.e. la prise de parole qui suit en séquence ladite libération de parole) et une loi de distribution de latence réseau entre un instant auquel une requête de prise de parole est transmise par un dispositif terminal et un instant auquel ladite requête est effectivement reçue par ledit dispositif SN. La mise en attente des données dans la mémoire tampon est gérée par une temporisation qui, une fois écoulée, déclenche la lecture de ladite mémoire tampon pour permettre la transmission effective desdites données auxdits dispositifs terminaux à l'écoute. Cette approche permet de raccourcir le temps d'accès à la prise de parole et de conserver un caractère équitable dans le processus d'autorisation de prise de parole indépendamment de la localisation dans le réseau de communication du dispositif terminal requérant la prise de parole, tout en assurant que le risque qu'un dispositif terminal auquel la prise de parole a été accordée soit destitué est statistiquement au-dessous d'un seuil prédéfini et tout en assurant au mieux la chronologie de prise de parole. On dit qu'un dispositif terminal est destitué, lorsqu'il est mis fin à la prise de parole par ledit dispositif terminal sans que ce soit de la volonté dudit dispositif terminal et alors que la prise de parole par ledit dispositif terminal avait été confirmée.

Ainsi, la durée de mise en attente des données en mémoire tampon avant diffusion aux dispositifs terminaux à l'écoute vise à maintenir la probabilité de destituer un dispositif terminal en dessous d'un seuil prédéfini. Un cas d'erreur se produit donc quand une requête de prise de parole est reçue après expiration de la temporisation déclenchant la lecture de la mémoire tampon associée à une autre requête de prise de parole qui aurait dû être temporellement moins prioritaire, c'est-à-dire lorsque :

$$T_1 + d_1 + T_b < T_2 + d_2 \qquad \& \qquad T_1 > T_2$$

où $T_1$ est représentatif de l'instant auquel la requête de prise de parole qui aurait dû être moins prioritaire a été transmise, $T_2$ est représentatif de l'instant auquel l'autre requête de prise de parole a été transmise, $d_1$ est représentatif d'une latence de transmission subie par la requête de prise de parole qui aurait dû être moins prioritaire dans le réseau de communication, $d_2$ est représentatif d'une latence de transmission subie par l'autre requête de prise de parole dans le réseau de communication, et $T_b$ est représentatif de la durée de la temporisation dont l'expiration déclenche la lecture de la mémoire tampon associée à la requête de prise de parole qui aurait dû être moins prioritaire.

La probabilité qu'un tel cas d'erreur se produise peut alors être exprimée de la manière suivante :

$$P'_{fail} = \frac{Prob\{T_1 + d_1 + T_b < T_2 + d_2 \ \& \ T_1 > T_2\}}{Prob\{T_1 + d_1 < T_2 + d_2 \ \& \ T_1 > T_2\} + Prob\{T_1 + d_1 < T_2 + d_2 \ \& \ T_1 < T_2\}}$$

où : $Prob\{x\}$ représente la probabilité qu'une expression représentée par $x$ soit vérifiée, et où :

$$Prob\{T_1 + d_1 + T_b < T_2 + d_2 \ \& \ T_1 > T_2\} = \int_0^{T_1} \int_{T_1+d_1+T_b-t}^{+\infty} f_\tau(t) f_\delta(d) \, dd \, dt$$

$$Prob\{T_1 + d_1 < T_2 + d_2 \ \& \ T_1 > T_2\} = \int_0^{T_1} \int_{T_1+d_1-t}^{+\infty} f_\tau(t) f_\delta(d) \, dd \, dt$$

$$Prob\{T_1 + d_1 + T_b < T_2 + d_2 \ \& \ T_1 < T_2\} = \int_{T_1}^{+\infty} \int_{T_1+d_1-t}^{+\infty} f_\tau(t) f_\delta(d) \, dd \, dt$$

avec $f_\tau(t)$ une loi de distribution de période de temps $t$ entre une libération de parole et une prochaine prise de parole et $f_\delta(d)$ une loi de distribution de latence réseau $d$ entre un instant auquel une requête de prise de parole est transmise par un dispositif terminal et un instant auquel ladite requête est effectivement reçue par un dispositif SN considéré.

Au final, selon un premier mode de réalisation, en considérant deux requêtes de prise de parole concurrentes, la probabilité $P_{fail}$ qu'un tel cas d'erreur se produise est exprimée de la manière suivante :

$$P_{fail} = P'_{fail}$$

Selon un second mode de réalisation, en considérant que tous les dispositifs terminaux peuvent chercher à prendre la parole de manière concurrente, la probabilité $P_{fail}$ qu'un tel cas d'erreur se produise est exprimée de la manière suivante :

$$P_{fail} = 1 - \left(1 - P'_{fail}\right)^{N-1}$$

où $N$ représente la quantité de dispositifs terminaux présents dans le réseau de communication.

Selon un troisième mode de réalisation, en considérant que tous les dispositifs terminaux ne vont pas chercher à prendre la parole de manière concurrente, la probabilité $P_{fail}$ qu'un tel cas d'erreur se produise est exprimée de la manière suivante :

$$P_{fail} = 1 - \sum_{k=0}^{N-1} \binom{N-1}{k} P_{push}{}^k \left(1 - P_{push}\right)^{N-1-k} \left(1 - P'_{fail}\right)^k$$

où $P_{push}$ représente la probabilité pour un dispositif terminal de requérir la prise de parole. La probabilité $P_{push}$ peut être déterminée par chaque dispositif SN en comptant une quantité de requêtes de prise de parole concurrentes détectées pour chaque prise de parole accordée, soit :

$$P_{push} = \left( \sum_{q=1}^{Q} \frac{R_q - 1}{N - 1} \right) / Q$$

où $R_q$ représente la quantité de requêtes concurrentes reçues pour chaque prise de parole accordée $q$ ($R_q \geq 1$) et où $Q$ représente une quantité de prises de parole accordées considérée.

Ainsi, grâce à ces lois de distribution $f_\tau(t)$ et $f_\delta(d)$, il est possible de déterminer une durée de temporisation $T_b$ permettant d'assurer statistiquement que la probabilité $P_{fail}$ qu'une requête de prise de parole qui aurait dû être plus prioritaire soit reçue après expiration de la durée de temporisation $T_b$ soit inférieure ou égale à un seuil prédéfini $P_{target}$.

L'approche proposée permet également de faire expirer de manière substantiellement simultanée la temporisation de lecture de la mémoire tampon de chaque dispositif SN mise en oeuvre dans le cadre d'une prise de parole, offrant ainsi la possibilité à tous les utilisateurs à l'écoute d'entendre la communication en même temps.

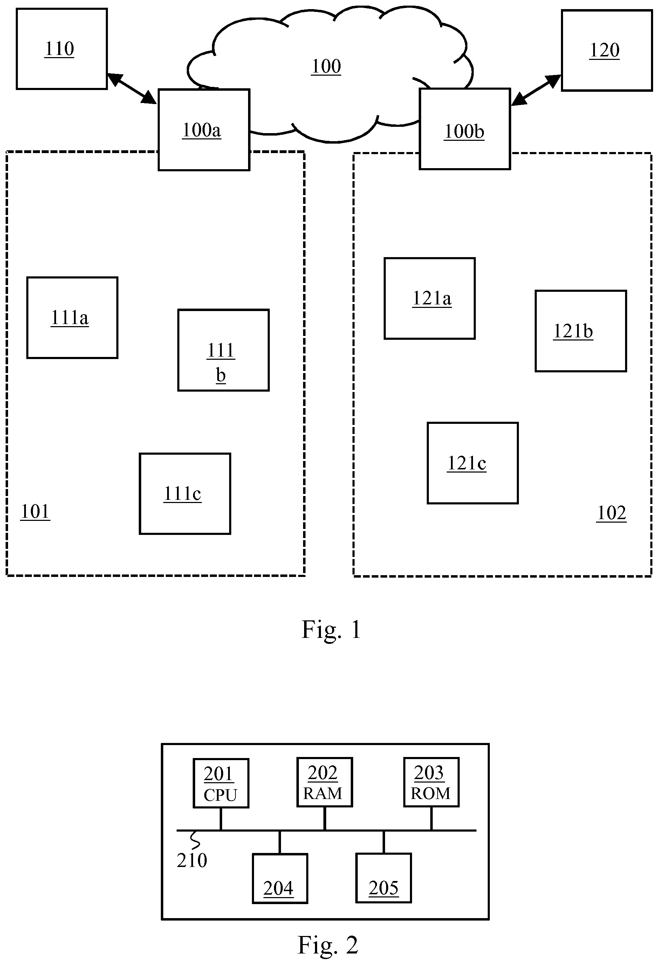

La **Fig. 1** illustre schématiquement un système de communication dans lequel la présente invention peut être mise en oeuvre.

Le système de communication comporte un premier dispositif d'interconnexion 100a et un second dispositif d'interconnexion 100b. Les premier 100a et second 100b dispositifs d'interconnexion sont interconnectés par un lien de communication 100. Le lien de communication 100 peut être un lien physique ou un lien logique. Le lien de communication 100 peut s'inscrire dans un réseau de communication, tel que l'Internet. Le lien de communication 100 peut être un lien de communication terrestre ou un lien de communication satellite.

Le premier dispositif d'interconnexion 100a est en charge d'interconnecter un premier sous-réseau 101 au lien de communication 100, et le second dispositif d'interconnexion 100b est en charge d'interconnecter un second sous-réseau 102 au lien de communication 100. Une fois interconnectés par le lien de communication 100, les premier 101 et second 102 sous-réseaux forment ainsi un réseau de communication, de sorte qu'un ou plusieurs dispositifs terminaux 111a, 111b, 111c du premier sous-réseau 101 peuvent indirectement communiquer avec un ou plusieurs dispositifs terminaux 121a, 121b, 121c du second sous-réseau 102.

De manière à permettre auxdits dispositifs terminaux de partager un canal de communication dans le cadre d'un mécanisme de type PTT, le système de communication inclut des dispositifs SN 110 et 120. Chaque sous-réseau 101 et 102 est associé avec un dispositif SN auquel chaque dispositif terminal dudit sous-réseau se réfère pour prendre la parole sur le canal de communication. Ainsi, sur la Fig. 1, le premier sous-réseau 101 est associé avec un premier dispositif SN 110 et le second sous-réseau 102 est associé avec un second dispositif SN 120.

Les fonctionnalités de dispositif SN décrites ci-après sont préférentiellement mises en oeuvre au niveau de la couche application du modèle OSI (« Open Systems Interconnection » en anglais). Ainsi, chaque dispositif SN peut être implémenté sur une machine indépendante, par exemple selon l'architecture présentée ci-après en relation avec la Fig. 2. Chaque dispositif SN peut aussi être incorporé dans le dispositif d'interconnexion qui relie le sous-réseau auquel ledit dispositif SN est associé avec le lien de communication 100. Il convient aussi de noter que chaque dispositif d'interconnexion peut être un unique équipement en charge de la mise en oeuvre de l'interconnexion d'un sous-réseau et du lien de communication 100, ainsi que de la mise en oeuvre dudit sous-réseau. Chaque dispositif d'interconnexion peut aussi être un ensemble d'équipements, un ou plusieurs équipements étant en charge de la mise en oeuvre de l'interconnexion d'un sous-réseau et du lien de communication 100 et un ou plusieurs autres équipements étant en charge de la mise en oeuvre dudit sous-réseau.

Chaque sous-réseau peut être une cellule de communication sans-fil dans laquelle le dispositif d'interconnexion de ladite cellule possède des fonctionnalités de point d'accès ou de station de base. Par exemple, chaque cellule est conforme à la famille de standards IEEE 802.11, aussi connue sous le nom de Wi-Fi (marque déposée). Chaque sous-réseau peut aussi être un réseau local LAN (« Local Area Network » en anglais) filaire, ou un réseau de type LTE (« Long Term Evolution » en anglais). Les premier 101 et second 102 sous-réseaux peuvent être de nature différente, c'est-à-dire que les premier 101 et second 102 sous-réseaux peuvent être conformes à des technologies de communication distinctes.

Un tel système de communication est particulièrement utile dans des situations d'urgence et de secours. En effet, les situations d'urgence et de secours dans un contexte de catastrophe naturelle (*e.g.* avalanche, tremblement de terre, inondation) ou de catastrophe d'origine humaine (*e.g.* attentat, catastrophe industrielle) sont souvent accompagnées d'une perturbation, voire d'une destruction, temporaire d'infrastructures de réseau cellulaire de télécommunication préalablement déployées sur site et/ou de réseaux d'accès terrestre (« backhaul network » en anglais) permettant d'interconnecter de telles infrastructures. Il est alors nécessaire de déployer temporairement des cellules sur site et d'interconnecter ces cellules entre elles pour permettre aux secouristes de communiquer et ainsi de se coordonner. Des liaisons satellite sont alors fréquemment utilisées pour interconnecter ces cellules déployées temporairement sur site.

Un tel système de communication peut également être avantageusement mis en oeuvre dans le cadre d'un maintien en condition opérationnelle d'un réseau privé de communication destiné par exemple à des opérations de gestion et de sécurité d'infrastructures critiques (*e.g.* centrale nucléaire, site industriel sensible). Dans ce contexte, l'utilisation d'un système de communication, insensible au déploiement d'une liaison satellite de secours pour interconnecter ces réseaux privés dans l'éventualité où les réseaux d'accès terrestres seraient inopérants, offre une garantie de résilience des moyens de communication.

Dans le cadre du mécanisme PTT, un seul dispositif terminal à la fois peut prendre la parole sur le canal de communication partagé, les autres dispositifs terminaux étant alors placés en situation d'écoute du dispositif terminal ayant pris la parole.

Comme déjà mentionné, un dispositif terminal ayant pris la parole sur le canal de communication partagé transmet des données aux autres dispositifs terminaux placés alors en situation d'écoute. Ces données sont par exemple des données audio de type voix. Une telle situation se produit lorsque le système de communication est un système de communication téléphonique de type « half-duplex » en anglais, c'est-à-dire que la communication se passe dans les deux sens, mais pas simultanément. Les données transmises pendant la prise de parole et à diffuser aux dispositifs terminaux à l'écoute peuvent être d'un autre type, comme par exemple des données vidéo ou audiovisuelles. Par exemple, les dispositifs terminaux incluent une caméra et, lorsqu'un événement prédéterminé survient sur un dispositif terminal, ledit dispositif terminal requiert la prise de parole de manière à diffuser aux autres dispositifs terminaux les données vidéo capturées par la caméra dudit dispositif terminal.

Le système de communication peut comporter une plus grande quantité de sous-réseaux. Chaque sous-réseau comporte un dispositif d'interconnexion permettant de connecter ledit sous-réseau aux autres sous-réseaux. Ces dispositifs d'interconnexion sont alors interconnectés via un ou plusieurs liens de communication, de telle sorte que chaque dispositif terminal d'un sous-réseau est apte à accéder, après avoir été autorisé par un dispositif SN associé audit sous-réseau, audit canal de transmission. Par souci de simplicité, la mise en oeuvre de l'invention est détaillée dans un système de communication incluant seulement deux sous-réseaux, mais les principes décrits ici sont applicables de manière identique en présence d'un système de communication incluant une plus grande quantité de sous-réseaux.

Le système de communication peut être adapté pour gérer une pluralité de groupes de dispositifs terminaux, les dispositifs terminaux d'un groupe devant partager un canal de communication dédié audit groupe. De tels groupes sont typiquement définis selon une organisation logique reflétant la réalité opérationnelle d'équipes utilisant le système de communication. Il en découle que chaque groupe peut être composé de dispositifs terminaux répartis dans différents sous-réseaux du système de communication et pas nécessairement présents au sein d'un même sous-réseau. Il convient par ailleurs de noter qu'un dispositif terminal peut appartenir à plusieurs groupes. Lorsque plusieurs groupes coexistent dans le système de communication, les mécanismes décrits ci-après sont mis en oeuvre indépendamment pour chaque groupe.

Dans le système de communication, les premier 110 et second 120 dispositifs SN partagent une même référence temporelle. Selon un premier exemple, les premier 110 et second 120 dispositifs SN s'appuient sur la technologie GPS («Global Positioning System » en anglais) pour partager la même référence temporelle. Selon un second exemple, les premier 110 et second 120 dispositifs SN s'appuient sur le protocole NTP (« Network Time Protocol » en anglais) tel que décrit dans le document normatif RFC 5905.

Préférentiellement, chaque dispositif terminal partage la même référence temporelle que le dispositif SN associé au sous-réseau auquel appartient ledit dispositif terminal.

Dans un mode de réalisation préférentiel, les dispositifs terminaux et les dispositifs SN communiquent au sein du réseau de communication grâce à des messages au format IP (« Internet Procotol » en anglais), et dans un mode de réalisation particulier, les données transmises par lesdits dispositifs terminaux sur le canal de communication partagé sont de type VoIP (« Voice over IP » en anglais).

La **Fig. 2** illustre schématiquement un exemple d'architecture matérielle du premier dispositif SN 110 et/ou du second dispositif SN 120. Considérons par la suite que l'exemple d'architecture matérielle représentée schématiquement à la Fig. 2 correspond au premier dispositif SN 110.

Le premier dispositif SN 110 inclut alors, reliés par un bus de communication 210 : un processeur ou CPU (*Central Processing Unit* en anglais) 201 ; une mémoire vive RAM (*Random Access Memory* en anglais) 202 ; une mémoire morte ROM (*Read Only Memory* en anglais) 203 ; une unité de stockage 204 ou un lecteur de support de stockage, tel qu'un lecteur de cartes SD (*Secure Digital* en anglais) ou un disque dur HDD (*Hard Disk Drive* en anglais) ; et un ensemble d'interfaces 205.

L'ensemble d'interfaces 205 permet au premier dispositif SN 110 de communiquer avec le second dispositif SN 120 via le lien de communication 100, ainsi qu'avec les dispositifs terminaux du premier sous-réseau 101. En considérant que l'exemple d'architecture matérielle représentée schématiquement à la Fig. 2 correspond au second dispositif SN 120, l'ensemble d'interfaces 205 permet au second dispositif SN 120 de communiquer avec le premier dispositif SN 110, ainsi qu'avec les dispositifs terminaux du second sous-réseau 102.

Le processeur 201 est capable d'exécuter des instructions chargées dans la RAM 202 à partir de la ROM 203, d'une mémoire externe, d'un support de stockage, ou d'un réseau de communication. Lorsque le premier dispositif SN 110 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut ainsi être implémenté sous forme logicielle par exécution d'un ensemble d'instructions par une machine programmable, tel qu'un processeur ou un DSP (*Digital Signal Processor* en anglais) ou un microcontrôleur, ou être implémenté sous forme matérielle par une machine ou un composant dédié, tel qu'un FPGA (*Field-Programmable Gate Array* en anglais) ou un ASIC (*Application-Specific Integrated Circuit* en anglais).

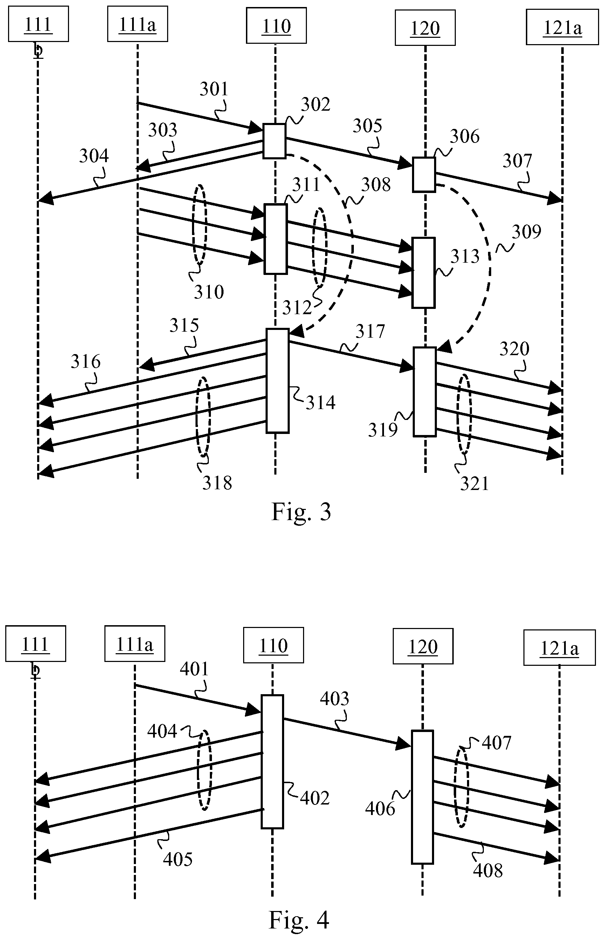

La **Fig. 3** illustre schématiquement des premiers échanges dans le système de communication pour permettre à un dispositif terminal de prendre la parole dans le cadre du mécanisme de type PTT. Dans le cadre de la Fig. 3, il est considéré que le premier sous-réseau 101 comporte les dispositifs terminaux 111a et 111b, et que le second sous-réseau 102 comporte le dispositif terminal 121a. Il est en outre considéré que le dispositif terminal 111a tente de prendre la parole dans le cadre du mécanisme de type PTT.

Dans une étape 301, le dispositif terminal 111a transmet au premier dispositif SN 110 une requête de prise de parole (« Floor Request » en anglais).

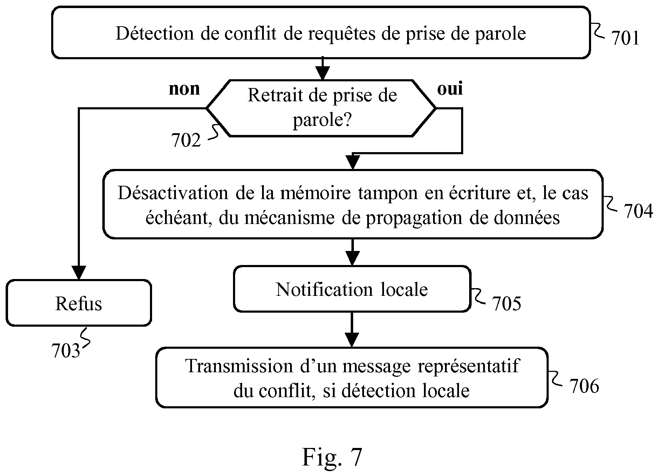

Dans une étape 302, le premier dispositif SN 110 reçoit la requête transmise à l'étape 301 par le dispositif terminal 111a et vérifie qu'il n'existe pas de requête de prise de parole qui soit concurrente et plus prioritaire. Un mécanisme de détermination de requête de prise de parole plus prioritaire est décrit ci-après dans le cadre de l'algorithme de la Fig. 7. Le premier dispositif SN 110 extrait de la requête reçue une information représentative d'un instant auquel le dispositif terminal 111a a transmis ladite requête. Dans un mode de réalisation préférentiel, ladite information correspond à une période de temps écoulée entre un instant auquel le message de libération de parole a été reçu par le dispositif terminal 111a dans le cadre de la dernière prise de parole (un instant de référence commun au réseau de communication dans le cas de la toute première prise de parole) et l'instant auquel le dispositif terminal 111a a transmis ladite requête. Dans ce cas, ladite information est représentative de la réactivité de l'utilisateur à vouloir accéder au canal de communication partagé par rapport à la dernière prise de parole. Il est ainsi possible de considérer plus prioritaire un dispositif terminal cherchant à prendre la parole dans un laps de temps plus court après la dernière libération de parole, et ce malgré le fait que les dispositifs terminaux soient respectivement notifiés de la libération de parole à différents instants. Dans un autre mode de réalisation, ladite information correspond à l'instant auquel le dispositif terminal 111a a transmis ladite requête selon la référence temporelle partagée.

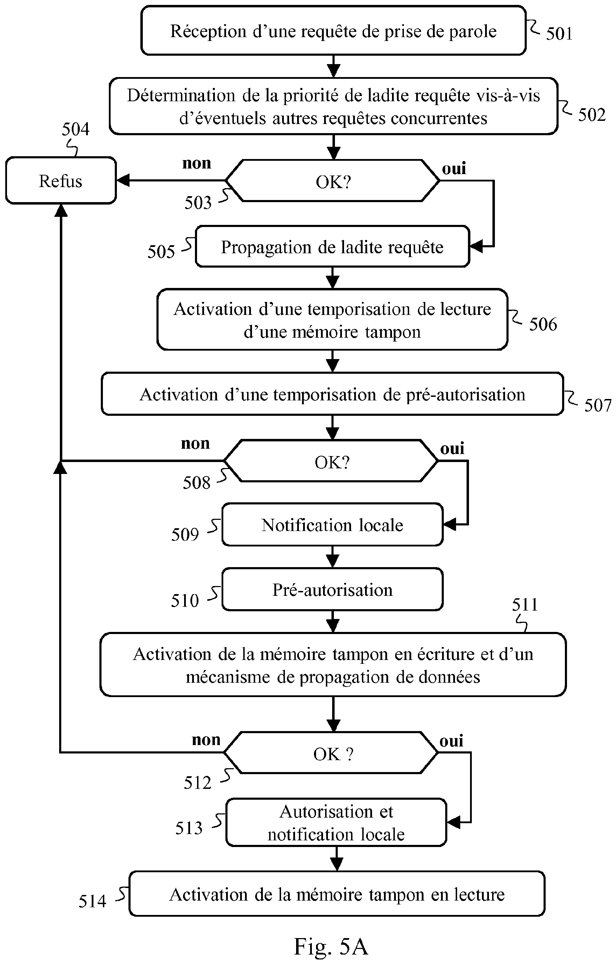

Dans une étape 303, lorsqu'il n'existe pas de telle requête concurrente et plus prioritaire, le premier dispositif SN 110 transmet au dispositif terminal 111a une pré-autorisation de prise de parole (« Floor Pre Grant » en anglais). Dans un mode de réalisation particulier, la transmission de cette pré-autorisation peut être retardée, tel que détaillé par la suite en relation avec la Fig. 5A.

Dans une étape 304, lorsqu'il n'existe pas de telle requête concurrente et plus prioritaire, le premier dispositif SN 110 transmet au dispositif terminal 111b un message de notification représentatif de la pré-autorisation accordée au dispositif terminal 111a. Ledit message de notification peut en outre inclure un identifiant du dispositif terminal 111a de manière à indiquer au dispositif terminal 111b à quel dispositif terminal la pré-autorisation a été accordée. Le dispositif terminal 111b se met alors à l'écoute du canal de communication partagé.

Dans un mode de réalisation préférentiel, l'étape 304 est effectuée avant l'étape 303. Cela permet de limiter le risque que le dispositif terminal 111b ne requiert la prise de parole alors qu'une requête de prise de parole a déjà été reçue en provenance du dispositif terminal 111a.

Dans une étape 305, lorsqu'il n'existe pas de telle requête concurrente et plus prioritaire, le premier dispositif SN 110 propage, en direction du second dispositif SN 120, la requête reçue à l'étape 302 en provenance du dispositif terminal 111a. Dans un mode de réalisation préférentiel, l'étape 305 est effectuée dès que possible après réception de la requête de prise de parole. Cela permet de limiter le risque de conflit ultérieur en avertissant au plus tôt le second dispositif SN 120.

Dans une étape 306, le second dispositif SN 120 reçoit la requête propagée par le premier dispositif SN à l'étape 305. Le second dispositif SN 120 vérifie alors qu'il n'existe pas de requête de prise de parole qui soit concurrente et plus prioritaire. Un mécanisme de détermination de requête de prise de parole plus prioritaire est décrit ci-après dans le cadre de l'algorithme de la Fig. 7. Le second dispositif SN 120 extrait de la requête reçue une information représentative d'un instant auquel le dispositif terminal 111a a transmis ladite requête. Dans un mode de réalisation préférentiel, ladite information correspond à une période de temps écoulée entre un instant auquel le message de libération de parole a été reçu par le dispositif terminal 111a dans le cadre de la dernière prise de parole (un instant de référence commun au réseau de communication dans le cas de la toute première prise de parole) et l'instant auquel le dispositif terminal 111a a transmis ladite requête. Dans un autre mode de réalisation, ladite information correspond à l'instant auquel le dispositif terminal 111a a transmis ladite requête selon la référence temporelle partagée.

Dans une étape 307, lorsqu'il n'existe pas de telle requête concurrente et plus prioritaire, le second dispositif SN 110 transmet au dispositif terminal 121a un message de notification représentatif de la pré-autorisation accordée par le premier dispositif SN 110 au dispositif terminal 111a, la propagation de la requête par le premier dispositif SN 110 au second dispositif SN 120 indiquant implicitement que le premier dispositif SN 110 a accordé une telle pré-autorisation au dispositif terminal 111a. Le dispositif terminal 121a se met alors à l'écoute du canal de communication partagé.

Dans une étape 308, lorsque le premier dispositif SN 110 détermine qu'il n'existe pas de requête concurrente et plus prioritaire à l'étape 302, le premier dispositif SN 110 met en place une première mémoire tampon dédiée à des données qui sont ultérieurement transmises par le dispositif terminal 111a dans le cadre de la prise de parole. La première mémoire tampon permet de temporairement stocker des données que le dispositif terminal 111a souhaite transmettre via ledit canal de communication partagé dans le cadre de la prise de parole. Le premier dispositif SN 110 active en outre une première temporisation de lecture de la première mémoire tampon, la lecture de la première mémoire tampon étant désactivée tant que la première temporisation de lecture n'est pas écoulée. La durée de la première temporisation est déterminée par le premier dispositif SN 110 d'après les lois de distribution $f_\tau(t)$ et $f_\delta(d)$ de manière à assurer que la probabilité $P_{fail}$ soit inférieure ou égale au seuil prédéfini $P_{target}$, tel que détaillé par la suite en relation avec la Fig. 5A.

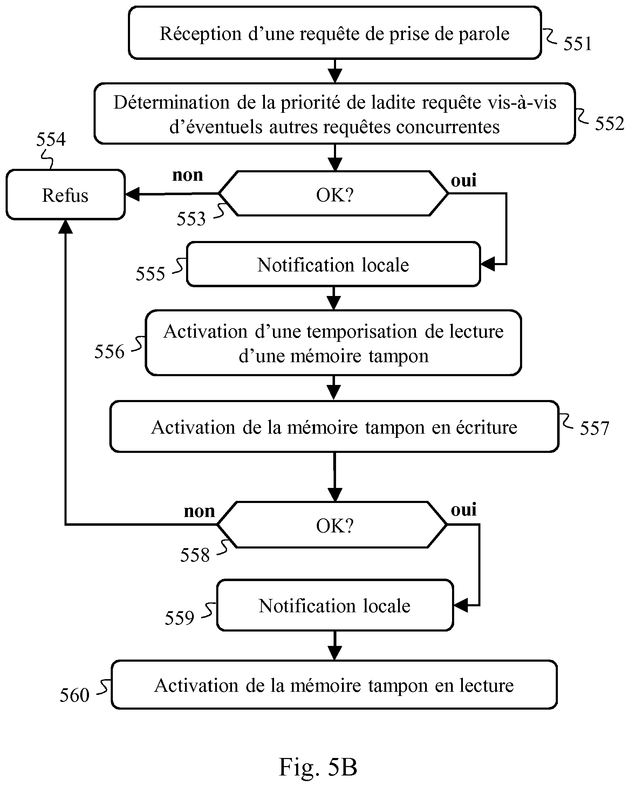

Dans une étape 309, lorsque le second dispositif SN 120 détermine qu'il n'existe pas de requête concurrente et plus prioritaire à l'étape 306, le second dispositif SN 120 met en place une seconde mémoire tampon dédiée aux données qui sont ultérieurement transmises par le dispositif terminal 111a dans le cadre de la prise de parole. La seconde mémoire tampon permet de temporairement stocker des données que le dispositif terminal 111a souhaite transmettre via ledit canal de communication partagé dans le cadre de la prise de parole. Le second dispositif SN 120 active en outre une seconde temporisation de lecture de la seconde mémoire tampon, la lecture de la seconde mémoire tampon étant désactivée tant que la seconde temporisation de lecture n'est pas écoulée. La durée de la seconde temporisation est déterminée par le second dispositif SN 120 d'après les lois de distribution $f_\tau(t)$ et $f_\delta(d)$ de manière à assurer que la probabilité $P_{fail}$ soit inférieure ou égale au seuil prédéfini $P_{target}$, tel que détaillé par la suite en relation avec la Fig. 5B.

Il convient de noter que la loi de distribution $f_\tau(t)$ peut être la même pour chacun des dispositifs SN, ou être différente. En pratique, dès lors que seuls les appels acceptés sont pris en compte dans les paramètres de la loi de distribution $f_\tau(t)$, les instances de la loi de distribution $f_\tau(t)$ utilisées par les dispositifs SN sont identiques puisque ces appels sont partagés par tous les dispositifs SN.

Il convient aussi de noter que les instances de la loi de distribution $f_\delta(d)$ sont cohérentes entre elles. Cela signifie que, en fonction de la structure du réseau de communication, les instances de la loi de distribution $f_\delta(d)$ utilisées par les dispositifs SN peuvent être identiques ; on est alors face à un réseau de communication homogène où les latences induites dans chacun des sous-réseaux sont équivalentes. Les instances de la loi de distribution $f_\delta(d)$ utilisées par les dispositifs SN peuvent être différentes, mais restent cohérentes entre elles du fait que lesdites instances sont représentatives des latences induites dans le réseau de communication du point de vue du dispositif SN considéré ; on est alors face à un réseau de communication hétérogène où les latences induites dans chacun des sous-réseaux sont substantiellement différentes et peuvent évoluer en fonction du contexte opérationnel de ce système de communication. Les instances de la loi de distribution $f_\delta(d)$ utilisées par les dispositifs SN peuvent être différentes, tout en restant cohérentes entre elles, lorsque les utilisateurs qui prennent la parole ne sont pas équitablement répartis au sein du réseau de communication.

Suite à la pré-autorisation transmise par le premier dispositif SN 110 à l'étape 303, le dispositif terminal 111a prend la parole et commence à transmettre, dans une étape 310, des données à diffuser à l'ensemble des dispositifs terminaux à l'écoute, *i.e.* les dispositifs terminaux 111b et 121a. Dans une étape 311, le premier dispositif SN 110 reçoit ces données et stocke lesdites données reçues dans la première mémoire tampon. Dans une étape 312, le premier dispositif SN 110 propage lesdites données reçues au second dispositif d'interconnexion 120, c'est-à-dire que le premier dispositif SN 110 n'utilise pas la première mémoire tampon pour propager lesdites données au second dispositif SN 120.

Dans une étape 313, le second dispositif SN 120 reçoit les données propagées par le premier dispositif SN 110 à l'étape 312 et les stocke dans la seconde mémoire tampon. Il en va ainsi pour toutes les données ultérieurement transmises par le dispositif terminal 111a dans le cadre de la prise de parole, *i.e.* stockage des données par le premier dispositif SN 110 dans la première mémoire tampon, propagation en parallèle desdites données par le premier dispositif SN 110 au second dispositif SN 120 et stockage desdites données par le second dispositif SN 120 dans la seconde mémoire tampon. Ces transmissions ultérieures de données dans le cadre de la prise de parole ne sont pas illustrées sur la Fig. 3 par souci de simplification.

Dans une étape 314, la première temporisation qui a été activée par le premier dispositif SN 110 à l'étape 308 arrive à expiration. Le premier dispositif SN 110 transmet alors au dispositif terminal 111a, dans une étape 315, un message de confirmation d'autorisation de prise de parole (« Floor Grant » en anglais). Le premier dispositif SN 110 transmet aussi, dans une étape 316, au dispositif terminal 111b un message de notification (« Floor Taken » en anglais) représentatif de la confirmation d'autorisation de prise de parole accordée au dispositif terminal 111a. Le premier dispositif SN 110 peut transmettre aussi, dans une étape 317, au second dispositif SN 120 un message de notification représentatif de la confirmation d'autorisation de prise de parole accordée au dispositif terminal 111a. Le second dispositif SN 120 est alors en mesure d'indiquer, par acquittement dudit message de notification, si le second dispositif SN 120 a détecté une situation de conflit nécessitant de destituer le dispositif terminal 111a ou si le second dispositif SN 120 confirme aussi l'autorisation de prise de parole accordée au dispositif terminal 111a.

Le premier dispositif SN 110 active alors la lecture de la première mémoire tampon de manière à transmettre, dans une étape 318, les données stockées dans la première mémoire tampon à chaque dispositif terminal qui est à l'écoute du canal de communication partagé et qui est présent dans le premier sous-réseau 101, *i.e.* le dispositif terminal 111b.

Dans une étape 319, la seconde temporisation qui a été activée par le second dispositif SN 120 à l'étape 309 arrive à expiration. Le second dispositif SN 120 transmet alors, dans une étape 320, au dispositif terminal 121a un message de notification représentatif de la confirmation d'autorisation de prise de parole accordée au dispositif terminal 111a. Le second dispositif SN 120 active alors la lecture de la seconde mémoire tampon de manière à transmettre, dans une étape 321, les données stockées dans la seconde mémoire tampon à chaque dispositif terminal qui est à l'écoute du canal de communication partagé et qui est présent dans le second sous-réseau 102, *i.e.* le dispositif terminal 121a.

Il est considéré dans le cadre de la Fig. 3 qu'il n'existe aucune requête de prise de parole qui soit concurrente et plus prioritaire. Lorsque le premier dispositif SN 110 ou le second dispositif SN 120 détecte une requête de prise de parole concurrente et plus prioritaire, ledit dispositif SN refuse la prise de parole par le dispositif 111a. Cet aspect est détaillé par la suite en relation avec les Figs. 5A, 5B et 7.

La **Fig. 4** illustre schématiquement des seconds échanges dans le système de communication pour permettre à un dispositif terminal de libérer volontairement la parole dans le cadre du mécanisme de type PTT. Dans le cadre de la Fig. 4, il est considéré que le premier sous-réseau 101 comporte les dispositifs terminaux 111a et 111b, et que le second sous-réseau 102 comporte le dispositif terminal 121a. Il est en outre considéré que le dispositif terminal 111a a pris la parole dans le cadre du mécanisme de type PTT.

Dans une étape 401, le dispositif terminal 111a transmet au premier dispositif SN 110 un message de libération de parole (« Floor Release » en anglais).

Dans une étape 402, le premier dispositif SN 110 reçoit le message transmis à l'étape 401 par le dispositif terminal 111a. Le premier dispositif SN 110 extrait du message reçu une information représentative d'un instant auquel le dispositif terminal 111a a transmis ledit message.

Dans une étape 403, le premier dispositif SN 110 propage, en direction du second dispositif SN 120, le message reçu à l'étape 402 en provenance du dispositif terminal 111a.

Dans une étape 404, le premier dispositif SN 110 désactive l'écriture dans la première mémoire tampon et continue de transmettre les données contenues dans la première mémoire tampon jusqu'à ce que la première mémoire tampon soit vide. Etant donné que le dispositif terminal 111a n'est pas supposé continuer à transmettre des données dans le cadre de la prise de parole après émission du message de libération de parole, le premier dispositif SN 110 peut aussi s'abstenir de désactiver l'écriture dans la première mémoire tampon.

Une fois que la première mémoire tampon est vide, le premier dispositif SN 110 libère la première mémoire tampon et transmet, dans une étape 405, au dispositif terminal 111b un message de notification représentatif de la libération de parole par le dispositif terminal 111a.

Dans une étape 406, le second dispositif SN 120 reçoit le message propagé par le premier dispositif SN 110 à l'étape 403. Le second dispositif SN 120 extrait du message reçu une information représentative d'un instant auquel le dispositif terminal 111a a transmis ledit message.

Dans une étape 407, le second dispositif SN 120 désactive l'écriture dans la seconde mémoire tampon et continue de transmettre les données contenues dans la seconde mémoire tampon jusqu'à ce que la seconde mémoire tampon soit vide. Etant donné que le dispositif terminal 111a n'est pas supposé continuer à transmettre des données dans le cadre de la prise de parole après émission du message de libération de parole, le second dispositif SN 110 peut aussi s'abstenir de désactiver l'écriture dans la seconde mémoire tampon.

Une fois que la seconde mémoire tampon est vide, le second dispositif SN 120 libère la seconde mémoire tampon et transmet au dispositif terminal 121b un message de notification représentatif de la libération de parole par le dispositif terminal 111a.

La **Fig. 5A** illustre schématiquement un algorithme, mis en oeuvre par le premier dispositif SN 110, pour permettre à un dispositif terminal présent dans le premier sous-réseau 101 de prendre la parole dans le cadre du mécanisme de type PTT. Les mêmes principes sont applicables par le second dispositif SN 120, pour permettre à un dispositif terminal présent dans le second sous-réseau 102 de prendre la parole dans le cadre du mécanisme de type PTT.

Dans une étape 501, le premier dispositif SN 110 reçoit une requête de prise de parole en provenance d'un dispositif terminal présent dans le premier sous-réseau 101.

Dans une étape 502 suivante, le premier dispositif SN 110 détermine la priorité de la requête reçue à l'étape 501 vis-à-vis de toute autre éventuelle requête de prise de parole dont le premier dispositif SN 110 aurait connaissance. Le premier dispositif SN 110 extrait de la requête reçue une information représentative d'un instant auquel ledit dispositif terminal a transmis ladite requête. Dans un mode de réalisation préférentiel, ladite information correspond à une période de temps écoulée entre un instant auquel le message de libération de parole a été reçu par ledit dispositif terminal dans le cadre de la dernière prise de parole (un instant de référence commun au réseau de communication dans le cas de la toute première prise de parole) et l'instant auquel ledit dispositif terminal a transmis ladite requête. Dans un autre mode de réalisation, ladite information correspond à l'instant auquel ledit dispositif terminal a transmis ladite requête selon la référence temporelle partagée.

Dans une étape 503 suivante, le premier dispositif SN 110 vérifie si la requête reçue à l'étape 501 peut être prise en compte ou si une autre requête qui serait concurrente et plus prioritaire doit être traitée. Si aucune autre requête, concurrente et plus prioritaire, n'existe, une étape 505 est effectuée ; sinon, une étape 504 est effectuée.

Dans l'étape 504, le premier dispositif SN 110 transmet, au dispositif terminal ayant transmis la requête reçue à l'étape 501, un message de notification de refus vis-à-vis de la requête reçue à l'étape 501. Le dispositif terminal ayant transmis la requête reçue à l'étape 501 ne peut alors pas prendre la parole.

Dans l'étape 505, le premier dispositif SN 110 propage la requête reçue à l'étape 501 au second dispositif SN 120.

Dans une étape 506 suivante, le premier dispositif SN 110 met en place une mémoire tampon dédiée à des données qui sont ultérieurement transmises, dans le cadre de la prise de parole, par le dispositif terminal ayant transmis la requête reçue à l'étape 501. Toute donnée transmise ultérieurement par ledit dispositif terminal dans le cadre de la prise de parole est alors stockée dans ladite mémoire tampon. Le premier dispositif SN 110 active en outre une temporisation de lecture de ladite mémoire tampon, la lecture de ladite mémoire tampon étant désactivée tant que la temporisation de lecture n'est pas écoulée. Le premier dispositif d'interconnexion 110 détermine la durée de la temporisation de lecture de ladite mémoire tampon d'après les lois de distribution $f_\tau(t)$ et $f_\delta(d)$ de manière à assurer que la probabilité $P_{fail}$ soit inférieure ou égale au seuil prédéfini $P_{target}$.

Dans un mode de réalisation préférentiel, les lois de distribution $f_\tau(t)$ et $f_\delta(d)$ sont prédéterminées grâce à des modèles prédéfinis.

Lorsque la loi de distribution $f_\tau(t)$ est définie par un modèle, la loi de distribution $f_\tau(t)$ est préférentiellement de type log-normal et exprimée de la manière suivante :

$$f_\tau(t) = \frac{1}{t\,\sigma\,\sqrt{2\pi}}\,e^{-\frac{(log(t)-\mu)^2}{2\sigma^2}}$$

où $\sigma$ représente l'écart type (« standard déviation » en anglais) de la loi de distribution et $\mu$ représente la moyenne (« mean » en anglais) de la loi de distribution. $\sigma$ et $\mu$ peuvent être déterminés grâce à un algorithme d'estimation du maximum de vraisemblance (« maximum likelihood estimation » en anglais).

Lorsque la loi de distribution $f_\delta(d)$ est définie par un modèle, la loi de distribution $f_\delta(d)$ est préférentiellement exprimée sous la forme d'une mixture de lois de distribution de Weibull à trois paramètres, de la manière suivante :

$$f_\delta(d) = \sum_i q_i f_{\delta_i}(d)$$

où i est un index sur les composantes de la mixture et où $q_i$ représente des coefficients de pondération tels que:

$$\sum_i q_i = 1$$

et où :

$$f_{\delta_i}(d) = \frac{s_i}{r_i}\left(\frac{d-l_i}{r_i}\right)^{s_i-1} e^{-\left(\frac{d-l_i}{r_i}\right)^{s_i}}$$

*pour d ≥ l$_i$*

Chaque composante de la mixture a des paramètres $s_i$, $r_i$ et $l_i$ différents, $s_i$ étant un paramètre de forme (« shape » en anglais), $r_i$ un paramètre d'échelle (« scale » en anglais) et $l_i$ un paramètre de localisation (« location » en anglais). Ces paramètres peuvent être déterminés par un algorithme de maximisation d'espérance (« expectation maximization » en anglais).

Préférentiellement, le premier dispositif SN 110 remplit préalablement une table de correspondance LUT (« Look-Up Table » en anglais) qui fournit une durée de temporisation en fonction du couple *(t, d)* en entrée. Cette approche est particulièrement avantageuse lorsque le premier dispositif SN 110 ne dispose pas de ressources calculatoires suffisantes pour que le temps de calcul de la durée de temporisation soit négligeable au vu de la durée de temporisation elle-même, voire lorsque le temps de calcul de la durée de temporisation est supérieur à la durée de temporisation elle-même. Le contenu de cette table de correspondance LUT est alors préalablement déterminé de la manière suivante, pour chaque dispositif SN :

1. Détermination de paramètres permettant de représenter la loi de distribution $f_\tau(t)$, c'est-à-dire l'écart type $\sigma$ et la

moyenne $\mu$ grâce à un algorithme d'estimation du maximum de vraisemblance dans le cas où la loi de distribution $f_\tau(t)$ est de type log-normal ;

2. Détermination de paramètres permettant de représenter la loi de distribution $f_\delta(d)$ applicable, c'est-à-dire les paramètres $s_i$, $r_i$ et $l_i$, ainsi que les coefficients de pondération $q_i$ lorsque la loi de distribution $f_\delta(d)$ est une mixture de lois de distribution de Weibull à trois paramètres ;

3. Détermination de la quantité de dispositifs terminaux présents dans le système de communication ;

4. Détermination de $P_{push}$, lorsque $P_{fail}$ est défini en fonction de $P_{push}$ ;

5. Définition de valeurs minimum et maximum de période de temps $t$ entre une libération de parole et une prochaine prise de parole, et de latence réseau $d$ entre un instant auquel une requête de prise de parole est transmise par un dispositif terminal et un instant auquel ladite requête est effectivement reçue par ledit dispositif SN ;

6. Définition d'un pas (« step » en anglais) entre deux valeurs de période de temps $t$ successives à considérer et d'un pas entre deux valeurs de latence réseau $d$ successives à considérer, de manière à définir chaque couple ($t$, $d$) à représenter dans la table de correspondance LUT ;

7. Définition d'une valeur maximum acceptable pour la temporisation $T_b$, par exemple en fonction des capacités mémoire dudit dispositif SN ;

8. Définition du seuil $P_{target}$ ;

9. Définition d'une marge d'erreur $\varepsilon$ acceptable entre $P_{fail}$ et $P_{target}$ ;

10. Détermination par bissection, en fonction des lois de distribution $f_\tau(t)$ et $f_\delta(d)$, d'une valeur de temporisation $T_b$ pour chaque couple ($t$, $d$) à représenter dans la table de correspondance LUT, de telle sorte que $P_{target}$ - $P_{fail} \leq \varepsilon$ et que la valeur de temporisation $T_b$ soit inférieure à la valeur maximum acceptable pour la temporisation $T_b$ ; il est aussi possible de considérer que la marge d'erreur $\varepsilon$ s'applique autour de la valeur $P_{target}$ et dans ce cas est déterminée d'une valeur de temporisation $T_b$ pour chaque couple ($t$, $d$) à représenter dans la table de correspondance LUT, de telle sorte que $|P_{target}$ - $P_{fail}| \leq \varepsilon$ et que la valeur de temporisation $T_b$ soit inférieure à la valeur maximum acceptable pour la temporisation $T_b$.

Une autre table de correspondance LUT peut aussi être construite pour pouvoir déterminer la durée de temporisation éventuellement mise en oeuvre pour l'envoi du message de pré-autorisation de prise de parole. La même approche de remplissage est utilisée pour cette autre table de correspondance LUT, mis à part qu'un autre seuil prédéfini $P'_{target}$, tel que $P'_{target}$ soit strictement supérieur à $P_{target}$, est utilisé en remplacement de $P_{target}$.

Ainsi, à partir de l'information représentative de l'instant auquel le dispositif terminal 111a a transmis ladite requête, le premier dispositif SN 110 est capable de déterminer la latence $d$ subie par ladite requête pour parvenir au premier dispositif SN 110 (la latence $d$ subie par ladite requête pour parvenir au second dispositif SN 120 dans le cadre de la Fig. 5B), ainsi que la période de temps $t$ entre la dernière libération de parole et l'instant auquel ladite requête a été transmise. A partir de ce couple ($t$, $d$) déterminé pour la requête de prise de parole reçue à l'étape 501, le premier dispositif SN 110 retrouve la valeur correspondante de temporisation $T_b$ contenue dans la table de correspondance LUT pour ce couple ($t$, $d$).

Etant donné qu'une table de correspondance LUT peut ne pas être représentative de tous les couples ($t$, $d$) à cause de la quantification liée à la définition des pas, le premier dispositif SN 110 peut effectuer une interpolation entre plusieurs couples ($t$, $d$) approchant le couple ($t$, $d$) représentatif de la requête de prise de parole reçue.

Dans un mode de réalisation alternatif, les lois de distribution $f_\tau(t)$ et $f_\delta(d)$ sont prédéterminées par chacun des dispositifs SN en fonction de statistiques long-terme précédemment recueillies au fil d'échanges de messages dans le cadre du mécanisme de type PTT. Une table de correspondance LUT qui fournit une durée de temporisation en fonction du couple ($t$, $d$) en entrée peut aussi être préalablement construite sur la base de ces statistiques.

Dans un mode de réalisation particulier, des instances de lois de distribution $f_\tau(t)$ et $f_\delta(d)$ sont prédéterminées pour chaque configuration d'un ensemble de configurations du réseau de communication, chacune desdites configurations répondant à un contexte opérationnel distinct (*e.g.* une première configuration quand le lien de communication 100 est un réseau d'accès terrestre et une seconde configuration quand le lien de communication est un lien satellite). Par exemple, chaque dispositif SN dispose d'instances de premières lois de distribution $f_\tau(t)$ et $f_\delta(d)$ (par exemple mises en oeuvre via des premières tables de correspondance LUT respectives) représentatives d'un réseau de communication homogène utilisant un lien de communication 100 de type réseau d'accès terrestre, et chaque dispositif SN dispose d'instances de secondes lois de distribution $f_\tau(t)$ et $f_\delta(d)$ (par exemple mises en oeuvre via des secondes tables de correspondance LUT respectives) représentatives d'un réseau de communication hétérogène utilisant un lien de communication 100 de type satellite. En cas de changement de configuration du réseau de communication, les dispositifs SN sélectionnent respectivement les instances de lois de distribution $f_\tau(t)$ et $f_\delta(d)$ applicables au contexte opérationnel effectif, *e.g.* les tables de correspondance LUT correspondant à la nouvelle configuration de réseau. En d'autres termes, différentes configurations du réseau de communication étant possibles, chaque dispositif SN sélectionne la loi de distribution $f_\tau(t)$ et la loi de distribution $f_\delta(d)$ à appliquer parmi un ensemble prédéfini de lois de distribution, en fonction d'une configuration effective du réseau de communication. Un tel changement de configuration du réseau de communication peut être détecté par chaque dispositif SN par réception d'un message venant d'une application gestionnaire du mécanisme de type PTT à l'échelle du réseau de communication et ayant connaissance des changements de topologie du réseau de communication. Lorsque chaque dispositif SN est intégré ou connecté à un dispositif d'interconnexion (interconnectant le sous-réseau auquel ledit dispositif SN est associé et chaque alternative de mise en oeuvre du lien de communication 100), le dispositif d'interconnexion peut prévenir ledit dispositif SN d'un changement d'interface (*e.g.* de liaison satellite, de réseau d'accès terrestre) de mise en oeuvre du lien de communication 100.

Dans une étape 507 suivante, le premier dispositif SN 110 active en outre une temporisation de pré-autorisation de prise de parole. Le premier dispositif d'interconnexion 110 détermine la durée de la temporisation de pré-autorisation de prise de parole d'après les lois de distribution $f_\tau(t)$ et $f_\delta(d)$ de manière à assurer que la probabilité $P_{fail}$ soit inférieure ou égale audit autre seuil prédéfini $P'_{target}$, ce qui implique que la durée de la temporisation de pré-autorisation de prise de parole soit strictement inférieure à la durée de la temporisation de lecture de ladite mémoire tampon. La durée de la temporisation de pré-autorisation de prise de parole est ainsi déterminée de la même manière que la durée de la temporisation de lecture de ladite mémoire tampon, mais en utilisant un seuil prédéfini différent.

Dans une étape 508 suivante, le premier dispositif SN 110 détermine si une autre requête qui serait concurrente et plus prioritaire est reçue avant que la temporisation de pré-autorisation de prise de parole n'expire. Si une telle autre requête est reçue, l'étape 504 est effectuée ; sinon, lorsque la temporisation de pré-autorisation de prise de parole est parvenue à expiration, une étape 509 est effectuée.

Dans l'étape 509, le premier dispositif SN 110 transmet à chaque dispositif terminal du premier sous-réseau 101 à l'écoute, autre que le dispositif terminal ayant transmis la requête reçue à l'étape 501, un message de notification représentatif d'une pré-autorisation de prise de parole accordée au dispositif terminal ayant transmis la requête reçue à l'étape 501.

Dans une étape 510 suivante, le premier dispositif SN 110 transmet, au dispositif terminal ayant transmis la requête reçue à l'étape 501, un message de pré-autorisation de prise de parole. Dans un mode de réalisation particulier, comme déjà décrit en relation avec la Fig. 3, la transmission du message de pré-autorisation de prise de parole n'est pas retardée. Retarder la transmission du message de pré-autorisation de prise de parole permet cependant de limiter les risques d'accepter à tort une requête de prise de parole, notamment vis-à-vis de requêtes concurrentes émanant de dispositifs terminaux présents sur le premier sous-réseau 101.

Dans une étape 511 suivante, le premier dispositif SN 110 active la mémoire tampon en écriture pour permettre de stocker des données transmises par ledit dispositif terminal dans le cadre de la prise de parole. Le premier dispositif SN 110 active en outre un mécanisme de propagation des données transmises par ledit dispositif terminal dans le cadre de la prise de parole. Le mécanisme de propagation de données est tel que les données reçues par le premier dispositif SN 110 en provenance dudit dispositif terminal dans le cadre de la prise de parole sont propagées par le premier dispositif SN 110 au second dispositif SN 120, sans avoir à passer par ladite mémoire tampon.

Dans une étape 512 suivante, le premier dispositif SN 110 détermine si une autre requête qui serait concurrente et plus prioritaire est reçue avant que la temporisation de lecture de ladite mémoire tampon n'expire. Si une telle autre requête est reçue, l'étape 504 est effectuée, dans laquelle le premier dispositif SN 110 libère ladite mémoire tampon et annule la temporisation de lecture de ladite mémoire tampon ; sinon, lorsque la temporisation de lecture de ladite mémoire tampon est parvenue à expiration, une étape 513 est effectuée.

Dans l'étape 513, le premier dispositif SN 110 transmet, au dispositif terminal ayant transmis la requête reçue à l'étape 501, un message de confirmation d'autorisation de prise de parole. Le premier dispositif SN 110 transmet à chaque dispositif terminal du premier sous-réseau 101 à l'écoute, *i.e.* autre que le dispositif terminal ayant transmis la requête reçue à l'étape 501, un message de notification représentatif de la confirmation d'autorisation de prise de parole.

Dans une étape 514 suivante, le premier dispositif SN 110 active ladite mémoire tampon en lecture. En d'autres termes, le premier dispositif SN 110 commence à transmettre à chaque dispositif terminal du premier sous-réseau 101 à l'écoute, *i.e.* autre que le dispositif terminal ayant transmis la requête reçue à l'étape 501, les données contenues dans ladite mémoire tampon. Les données contenues dans ladite mémoire tampon sont extraites de ladite mémoire tampon et transmises dans le premier sous-réseau 101 substantiellement au rythme auquel le premier dispositif SN 110 a reçu lesdites données en provenance du dispositif terminal ayant transmis la requête reçue à l'étape 501.

La **Fig.** 5B illustre schématiquement un algorithme, mis en oeuvre par le second dispositif SN 120, pour permettre à un dispositif terminal présent dans le premier sous-réseau 101 de prendre la parole dans le cadre du mécanisme de type PTT. Les mêmes principes sont applicables par le premier dispositif SN 110, pour permettre à un dispositif terminal présent dans le second sous-réseau 102 de prendre la parole dans le cadre du mécanisme de type PTT.

Dans une étape 551, le second dispositif SN 120 reçoit une requête de prise de parole en provenance du premier dispositif SN 110. Ladite requête de prise de parole est à l'origine transmise par un dispositif terminal présent dans le premier sous-réseau 101 et a été propagée par le premier dispositif SN 110.

Dans une étape 552 suivante, le second dispositif SN 120 détermine la priorité de la requête reçue à l'étape 551 vis-à-vis de toute autre éventuelle requête de prise de parole dont le second dispositif SN 120 aurait connaissance. Le second dispositif SN 120 extrait de la requête reçue une information représentative d'un instant auquel ledit dispositif terminal a transmis ladite requête. Dans un mode de réalisation préférentiel, ladite information correspond à une période de temps écoulée entre un instant auquel le message de libération de parole a été reçu par ledit dispositif terminal dans le cadre de la dernière prise de parole (un instant de référence commun au réseau de communication dans le cas de la toute première prise de parole) et l'instant auquel ledit dispositif terminal a transmis ladite requête. Dans un autre mode de réalisation, ladite information correspond à l'instant auquel ledit dispositif terminal a transmis ladite requête selon la référence temporelle partagée.

Dans une étape 553 suivante, le second dispositif SN 120 vérifie si la requête reçue à l'étape 551 peut être prise en compte ou si une autre requête qui serait concurrente et plus prioritaire doit être traitée. Si aucune autre requête, concurrente et plus prioritaire, n'existe, une étape 555 est effectuée ; sinon, une étape 554 est effectuée.

Dans l'étape 554, le second dispositif SN 120 transmet au premier dispositif SN 110 un message de notification de refus vis-à-vis de la requête reçue à l'étape 551. Le dispositif terminal à l'origine de la requête reçue à l'étape 551 ne peut alors pas prendre la parole.

Dans l'étape 555, le second dispositif SN 120 transmet, à chaque dispositif terminal du second sous-réseau 102 à l'écoute, un message de notification représentatif d'une pré-autorisation de prise de parole accordée au dispositif terminal à l'origine de la requête reçue à l'étape 551.

Dans une étape 556 suivante, le second dispositif SN 120 met en place une mémoire tampon dédiée à des données qui sont ultérieurement transmises, dans le cadre de la prise de parole, par le dispositif terminal à l'origine de la requête reçue à l'étape 551. Toute donnée transmise ultérieurement par ledit dispositif terminal dans le cadre de la prise de parole est alors stockée dans ladite mémoire tampon. Le second dispositif SN 120 active en outre une temporisation de lecture de ladite mémoire tampon, la lecture de ladite mémoire tampon étant désactivée tant que la temporisation de lecture n'est pas écoulée. Le second dispositif SN 120 détermine la durée de la temporisation de lecture de ladite mémoire tampon d'après les lois de distribution $f_\tau(t)$ et $f_\delta(d)$ de manière à assurer que la probabilité $P_{fail}$ soit inférieure ou égale au seuil prédéfini $P_{target}$. Le second dispositif SN 120 détermine la durée de la temporisation de lecture de ladite mémoire tampon de la même manière que le premier dispositif SN 110 le fait dans le cadre de l'algorithme de la Fig. 5A. Cela permet d'assurer que les lectures des mémoires tampon respectivement mises en oeuvre par les premier 110 et second 120 dispositifs SN soient substantiellement déclenchées en même temps, étant donné que la loi de distribution $f_\tau(t)$ est en pratique identique pour l'ensemble des dispositifs SN et que l'instance de la loi de distribution $f_\delta(d)$ utilisée par chacun des dispositifs SN est cohérente avec les instances de la loi de distribution $f_\delta(d)$ respectivement utilisées par les autres dispositifs SN.

Dans une étape 557 suivante, le second dispositif SN 120 active la mémoire tampon en écriture pour permettre de stocker des données propagées par le premier dispositif SN 110 dans le cadre de la prise de parole par le dispositif terminal à l'origine de la requête reçue à l'étape 551.

Dans une étape 558 suivante, le second dispositif SN 120 détermine si une autre requête qui serait concurrente et plus prioritaire est reçue avant que la temporisation de lecture de ladite mémoire tampon n'expire. Si une telle autre requête est reçue, l'étape 554 est effectuée, dans laquelle le second dispositif SN 120 libère ladite mémoire tampon et annule la temporisation de lecture de ladite mémoire tampon ; sinon, lorsque la temporisation de lecture de ladite mémoire tampon est parvenue à expiration, une étape 559 est effectuée.

Dans l'étape 559, le second dispositif SN 110 transmet, à chaque dispositif terminal du second sous-réseau 102 à l'écoute, un message de notification représentatif d'une confirmation d'autorisation de prise de parole par le dispositif terminal à l'origine de la requête reçue à l'étape 551.

Dans une étape 560 suivante, le second dispositif SN 120 active ladite mémoire tampon en lecture. En d'autres termes, le second dispositif SN 120 commence à transmettre, à chaque dispositif terminal du second sous-réseau 102 à l'écoute, les données contenues dans ladite mémoire tampon. Les données contenues dans ladite mémoire tampon sont extraites de ladite mémoire tampon et transmises dans le second sous-réseau 102 substantiellement au rythme auquel le second dispositif SN 120 a reçu lesdites données en provenance du premier dispositif SN 110.

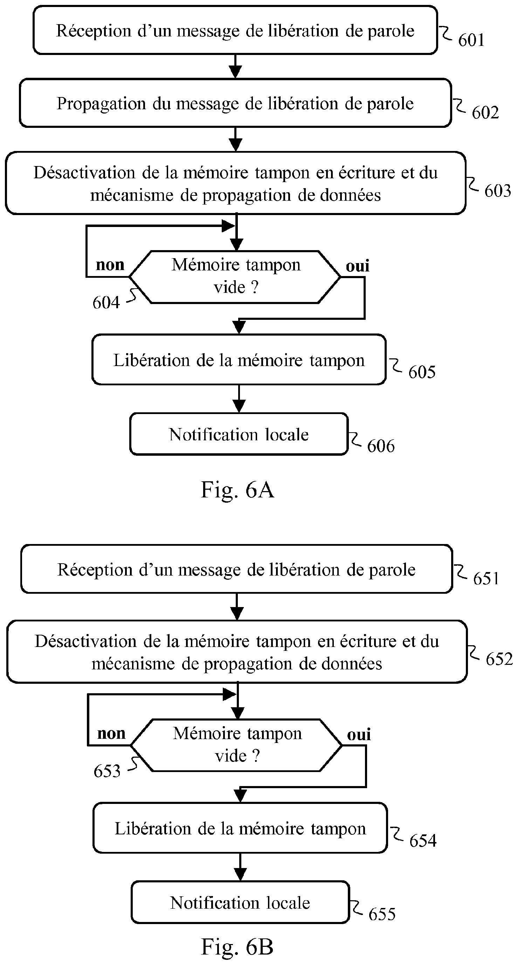

La **Fig. 6A** illustre schématiquement un algorithme, mis en oeuvre par le premier dispositif SN 110, pour permettre à un dispositif terminal présent sur le premier sous-réseau 101 de libérer volontairement la parole dans le cadre du mécanisme de type PTT. Les mêmes principes sont applicables par le second dispositif SN 120, pour permettre à un dispositif terminal présent dans le second sous-réseau 102 de libérer volontairement la parole dans le cadre du mécanisme de type PTT.

Dans une étape 601, le premier dispositif SN 110 reçoit un message de libération de parole en provenance d'un dispositif terminal présent dans le premier sous-réseau 101 et auquel la prise de parole a été préalablement accordée. Le premier dispositif SN 110 extrait du message reçu une information représentative d'un instant auquel le dispositif terminal 11 la a transmis ledit message.

Dans une étape 602 suivante, le premier dispositif SN 110 propage le message reçu à l'étape 601 au second dispositif SN 120.

Dans une étape 603 suivante, le premier dispositif SN 110 désactive l'écriture dans la mémoire tampon dont la lecture a été activée à l'étape 514. Etant donné que le dispositif terminal ayant transmis le message reçu à l'étape 601 n'est pas supposé continuer à transmettre des données dans le cadre de la prise de parole après émission du message de libération de parole, le premier dispositif SN 110 peut aussi s'abstenir de désactiver l'écriture dans ladite mémoire tampon.

Dans une étape 604 suivante, le premier dispositif SN 110 vérifie si la mémoire tampon dont la lecture a été activée à l'étape 514 est vide. La lecture de la mémoire tampon est maintenue jusqu'à ce que ladite mémoire tampon soit vide, de manière à transmettre les données stockées dans ladite mémoire tampon à chaque dispositif terminal du premier sous-réseau 101 à l'écoute, *i.e.* à l'exception du dispositif terminal ayant transmis le message reçu à l'étape 601. Lorsque ladite mémoire tampon est vide, une étape 605 est effectuée ; sinon, l'étape 604 est réitérée.

Dans l'étape 605, le premier dispositif SN 110 libère ladite mémoire tampon.

Dans une étape 606 suivante, le premier dispositif SN 110 transmet, à chaque dispositif terminal du premier sous-réseau 101 à l'écoute, *i.e.* à l'exception du dispositif terminal ayant transmis le message reçu à l'étape 601, un message de notification représentatif de la libération de parole par le dispositif terminal ayant transmis le message reçu à l'étape 601.

La **Fig. 6B** illustre schématiquement un algorithme, mis en oeuvre par le second dispositif SN 120, pour permettre à un dispositif terminal présent sur le premier sous-réseau 101 de libérer volontairement la parole dans le cadre du mécanisme de type PTT. Les mêmes principes sont applicables par le premier dispositif SN 110, pour permettre à un dispositif terminal présent dans le second sous-réseau 102 de libérer volontairement la parole dans le cadre du mécanisme de type PTT.

Dans une étape 651, le second dispositif SN 120 reçoit un message de libération de parole en provenance du premier dispositif SN 110. Ledit message de libération de parole est à l'origine transmis par un dispositif terminal présent dans le premier sous-réseau 101 et auquel la prise de parole a été préalablement accordée, et a été propagée par le premier dispositif SN 110. Le second dispositif SN 120 extrait du message reçu une information représentative d'un instant auquel le dispositif terminal 111a a transmis ledit message.

Dans une étape 652 suivante, le second dispositif SN 120 désactive l'écriture dans la mémoire tampon dont la lecture a été activée à l'étape 560. Etant donné que le dispositif terminal à l'origine du message reçu à l'étape 651 n'est pas supposé continuer à transmettre des données dans le cadre de la prise de parole après émission du message de libération de parole, le second dispositif SN 120 peut aussi s'abstenir de désactiver l'écriture dans ladite mémoire tampon.

Dans une étape 653 suivante, le second dispositif SN 120 vérifie si ladite mémoire tampon est vide. La lecture de la mémoire tampon est maintenue jusqu'à ce que ladite mémoire tampon soit vide, de manière à transmettre les données stockées dans ladite mémoire tampon à chaque dispositif terminal du second sous-réseau 102 à l'écoute. Lorsque ladite mémoire tampon est vide, une étape 654 est effectuée ; sinon, l'étape 653 est réitérée.

Dans l'étape 654, le second dispositif SN 120 libère ladite mémoire tampon.

Dans une étape 655 suivante, le second dispositif SN 120 transmet, à chaque dispositif terminal du second sous-réseau 102 à l'écoute un message de notification représentatif de la libération de parole par le dispositif terminal à l'origine du message de libération de parole reçu à l'étape 651.

La **Fig. 7** illustre schématiquement un algorithme, mis en oeuvre par le premier dispositif SN 110 et par le second dispositif SN 120, de gestion d'un conflit de prise de parole dans le cadre du mécanisme de type PTT. Considérons que le cas où l'algorithme de la Fig. 7 est mis en oeuvre par le premier dispositif SN 110. Les mêmes principes s'appliquent dans le cas où l'algorithme de la Fig. 7 est mis en oeuvre par le second dispositif SN 120.

Dans une étape 701, le premier dispositif SN 110 détecte un conflit de requêtes de prise de parole. Un tel conflit est détecté lorsqu'une requête de prise de parole, dont l'origine est un premier dispositif terminal, est reçue par le premier dispositif d'interconnexion 110 alors que la prise de parole a déjà été accordée à un second dispositif terminal. Un tel conflit est aussi détecté lorsque le premier dispositif d'interconnexion 110 doit traiter plusieurs requêtes de prise de parole, dont les origines respectives sont des dispositifs terminaux distincts. Un tel conflit est aussi détecté lorsque le premier dispositif SN 110 est informé par le second dispositif SN 120 qu'un tel conflit existe.

Lorsque le premier dispositif d'interconnexion 110 doit traiter plusieurs requêtes de prise de parole dont les origines respectives sont des dispositifs terminaux distincts, le premier dispositif SN 110 détermine quelle requête de prise de parole est la plus prioritaire.

Dans un mode de réalisation particulier, chaque requête de prise de parole est associée à un niveau de priorité explicite ou tacite. Ledit niveau de priorité est tacite lorsque, sans mention dudit niveau de priorité dans ladite requête de prise de parole, le premier dispositif d'interconnexion 110 est apte à déterminer le niveau de priorité de ladite requête. Par exemple, les dispositifs terminaux peuvent être associés à un niveau de priorité prédéfini, *e.g.* dans le cadre d'un déploiement du système de communication dans des situations d'urgence et de secours, des dispositifs terminaux détenus par des secouristes en charge de coordonner des actions de terrain peuvent être associés à des niveaux de priorité plus élevés que des secouristes en charge de réaliser les actions de terrain.

Dans un mode de réalisation préférentiel, le premier dispositif SN 110 détermine quelle requête de prise de parole est temporellement la plus prioritaire, de manière à limiter le risque de ne pas respecter la chronologie de tentative de prise de parole (*i.e.* le risque qu'un utilisateur X ayant chronologiquement tenté de parler avant un utilisateur Y ne soit entendu par au moins un autre utilisateur Z après l'utilisateur Y). Chaque requête de prise de parole inclut préférentiellement une information de période de temps écoulée entre un instant auquel le message de libération de parole a été reçu par le dispositif terminal concerné dans le cadre de la dernière prise de parole (un instant de référence commun au réseau de communication dans le cas de la toute première prise de parole) et l'instant auquel ledit dispositif terminal concerné a transmis ladite requête de prise de parole. Dans ce cas, ladite information est représentative de la réactivité de l'utilisateur à vouloir accéder au canal de communication partagé par rapport à la dernière prise de parole. Il est ainsi possible de considérer temporellement plus prioritaire un dispositif terminal cherchant à prendre la parole dans un laps de temps plus court après la dernière libération de parole, et ce malgré le fait que les dispositifs terminaux soient respectivement notifiés de la libération de parole à différents instants. De manière alternative, chaque requête de prise de parole inclut une information représentative de l'instant auquel le dispositif terminal concerné a transmis la requête de prise de parole selon la référence temporelle partagée. Il est ainsi possible de considérer temporellement plus prioritaire un dispositif terminal cherchant à prendre la parole au plus tôt au vu de la référence temporelle partagée.

Dans un mode de réalisation particulier, le premier dispositif SN 110 cherche à déterminer le niveau de priorité, explicite ou tacite, associé à chaque requête de prise de parole. Le premier dispositif SN 110 considère alors la requête associée au niveau de priorité le plus haut comme étant la requête la plus prioritaire. Et, lorsque le premier dispositif SN 110 est face à deux requêtes de prise de parole qui sont explicitement ou tacitement associées à un même niveau de priorité, le premier dispositif SN 110 cherche à déterminer quelle requête est temporellement plus prioritaire.

Dans une étape 702, le premier dispositif SN 110 vérifie si le conflit détecté nécessite de retirer à un dispositif terminal de la prise de parole qui avait été préalablement pré-accordée audit dispositif terminal ou dont la prise de parole avait été confirmée audit dispositif terminal. C'est notamment le cas lorsque le premier dispositif SN 110 est informé par le second dispositif SN 120 qu'un conflit existe. Si le conflit détecté nécessite de retirer à un dispositif terminal la prise de parole, une étape 704 est effectuée ; sinon, une étape 703 est effectuée.

Dans l'étape 703, le premier dispositif SN 110 refuse toute requête de prise de parole qui, dans le cadre du conflit, n'est pas la plus prioritaire. Lorsque ladite requête de prise de parole provient d'un dispositif terminal du premier sous-réseau 101, le premier dispositif SN 110 transmet audit dispositif terminal un message de notification représentatif d'un refus de prise de parole. Lorsque ladite requête de prise de parole provient d'un dispositif terminal du second sous-réseau 102, c'est-à-dire que ladite requête de prise de parole a été propagée par le second dispositif SN 120, le premier dispositif SN 110 transmet au second dispositif d'interconnexion 120 un message de notification représentatif d'un refus de prise de parole.

Dans l'étape 704, le premier dispositif SN 110 désactive la mémoire tampon qui a été préalablement mise en place, à l'étape 511 ou à l'étape 557, pour la prise de parole dudit dispositif terminal. Lorsque ledit dispositif terminal est présent dans le premier sous-réseau 101, le premier dispositif SN 110 désactive en outre le mécanisme de propagation, en direction du second dispositif SN 120, des données transmises par ledit dispositif terminal dans le cadre de ladite prise de parole.

Dans une étape 705 suivante, le premier dispositif SN 110 envoie à chaque dispositif terminal qui est présent sur le premier sous-réseau 101 un message de notification de retrait de la prise de parole qui avait été pré-accordée ou confirmée audit dispositif terminal. Lorsque ledit dispositif terminal est présent dans le premier sous-réseau 101, ledit dispositif terminal reçoit ledit message de notification et stoppe l'émission de données en conséquence. Ainsi, lorsque ledit dispositif terminal est présent sur le premier sous-réseau 101, ledit dispositif terminal est notifié que la prise de parole est refusée audit dispositif terminal.

Dans une étape 706 suivante, lorsque le premier dispositif SN 110 a détecté de lui-même le conflit, c'est-à-dire que le premier dispositif SN 110 n'a pas été informé du conflit par le second dispositif SN 120, le premier dispositif SN 110 informe le second dispositif SN 120 du conflit détecté.

## Revendications

1. Procédé de gestion de prise de parole sur un canal de communication partagé dans le cadre de communications en alternat implémentées dans un réseau de communication composé d'une pluralité de sous-réseaux (101 ; 102) interconnectés, chaque sous-réseau étant associé à un dispositif super-noeud (110 ; 120) du réseau de communication, le procédé étant mis en oeuvre par un dit dispositif super-noeud (110),
**caractérisé en ce que**, lorsqu'une première requête de prise de parole est reçue (302 ; 501) d'un dispositif terminal du sous-réseau auquel ledit dispositif super-noeud est associé et que ledit dispositif super-noeud n'a pas connaissance d'au moins une seconde requête de prise de parole plus prioritaire, ledit dispositif super-noeud effectue les étapes suivantes :

   - propager (305 ; 505) la première requête de prise de parole à chaque autre dispositif super-noeud ;

- transmettre (303 ; 510) un message de pré-autorisation de prise de parole audit dispositif terminal de sorte à autoriser ledit dispositif terminal à prendre la parole ;
- transmettre (304 ; 509) un message de notification de pré-autorisation de prise de parole à chaque autre dispositif terminal du sous-réseau auquel le dispositif super-noeud est associé, de sorte à placer chaque dit autre dispositif terminal à l'écoute du canal de communication partagé ;
- déterminer (308 ; 506) une durée d'une temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ;
- stocker (311; 511) dans une mémoire tampon des données reçues en provenance dudit dispositif terminal dans le cadre de la prise de parole, et propager (312 ; 511) lesdites données à destination de chaque autre dispositif super-noeud ; et
- activer (314 ; 514) en lecture la mémoire tampon pour diffuser les données stockées à chaque dispositif terminal à l'écoute sur le sous-réseau associé audit dispositif super-noeud, lorsque ladite temporisation est écoulée ;

et **en ce que**, lorsque ledit dispositif super-noeud détecte (701) au moins une seconde requête de prise de parole plus prioritaire avant expiration de ladite temporisation, ledit dispositif super-noeud effectue les étapes suivantes :

- libérer (704) la mémoire tampon ; et
- notifier (705) ledit dispositif terminal que la prise de parole est refusée audit dispositif terminal.

2. Procédé de gestion de prise de parole sur un canal de communication partagé dans le cadre de communications en alternat implémentées dans un réseau de communication composé d'une pluralité de sous-réseaux (101 ; 102) interconnectés, chaque sous-réseau étant associé à un dispositif super-noeud (110 ; 120) du réseau de communication, le procédé étant mis en oeuvre par un dit dispositif super-noeud (120),
**caractérisé en ce que**, lorsqu'une première requête de prise de parole est reçue (306; 551) d'un dispositif terminal d'un autre sous-réseau que celui auquel ledit dispositif super-noeud est associé et que ledit dispositif super-noeud n'a pas connaissance d'au moins une seconde requête de prise de parole plus prioritaire, ledit dispositif super-noeud effectue les étapes suivantes :

- transmettre (307 ; 555) un message de notification de pré-autorisation de prise de parole à chaque dispositif terminal du sous-réseau auquel le dispositif super-noeud est associé, de sorte à placer chaque dispositif terminal dudit sous-réseau à l'écoute du canal de communication partagé ;
- déterminer (309 ; 556) la durée de la temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ;
- stocker (313 ; 557) dans une mémoire tampon des données propagées par un autre dispositif super-noeud dans le cadre de la prise de parole ;
- activer (319 ; 560) en lecture la mémoire tampon pour diffuser les données stockées à chaque dispositif terminal à l'écoute sur le sous-réseau associé audit dispositif super-noeud, lorsque ladite temporisation est écoulée ;

et **en ce que**, lorsque ledit dispositif super-noeud détecte (701) au moins une seconde requête de prise de parole plus prioritaire avant expiration de ladite temporisation, ledit dispositif super-noeud libère (704) la mémoire tampon.

3. Procédé de gestion de prise de parole sur un canal de communication partagé dans le cadre de communications en alternat implémentées dans un réseau de communication composé d'une pluralité de sous-réseaux (101, 102) interconnectés, le procédé étant mis en oeuvre par un dispositif super-noeud (120) conformément aux revendications 1 et 2.

4. Procédé selon la revendication 3, **caractérisé en ce que** ledit dispositif super-noeud transmet le message de pré-autorisation de prise de parole après expiration d'une autre temporisation de durée déterminée (507) en fonction de la loi de distribution $f_\tau(t)$ et de la loi de distribution $f_\delta(d)$, de sorte que la probabilité de destituer ledit dispositif terminal de la prise de parole soit en dessous d'un second seuil prédéfini strictement supérieur audit premier seuil.

5. Procédé selon l'une quelconque des revendications 3 et 4, **caractérisé en ce que** la loi de distribution $f_\tau(t)$ est définie par un modèle de type log-normal et exprimée de la manière suivante :

$$f_\tau(t) = \frac{1}{t\,\sigma\,\sqrt{2\pi}}\, e^{-\frac{(log(t)-\mu)^2}{2\sigma^2}}$$

où $\sigma$ représente l'écart type de la loi de distribution $f_\tau(t)$ et $\mu$ représente la moyenne de la loi de distribution $f_\tau(t)$.

6. Procédé selon l'une quelconque des revendications 3 à 5, **caractérisé en ce que** la loi de distribution $f_\delta(d)$ est définie par un modèle sous la forme d'une mixture de lois de distribution de Weibull à trois paramètres et exprimée de la manière suivante :

$$f_\delta(d) = \sum_i q_i f_{\delta_i}(d)$$

où $i$ est un index sur les composantes de la mixture et où $q_i$ représente des coefficients de pondération tels que:

$$\sum_i q_i = 1$$

et où :

$$f_{\delta_i}(d) = \frac{s_i}{r_i}\left(\frac{d-l_i}{r_i}\right)^{s_i-1} e^{-\left(\frac{d-l_i}{r_i}\right)^{s_i}}$$

pour $d \geq l_i$
ou $s_i$ est un paramètre de forme, $r_i$ un paramètre d'échelle et $l_i$ un paramètre de localisation.

7. Procédé selon l'une quelconque des revendications 3 et 4, **caractérisé en ce que** les lois de distribution $f_\tau(t)$ et $f_\delta(d)$ sont prédéterminées par ledit dispositif super-noeud en fonction de statistiques long-terme précédemment recueillies au fil d'échanges de messages dans le cadre des communications en alternat.

8. Procédé selon l'une quelconque des revendications 3 à 7, **caractérisé en ce que** la probabilité $P_{fail}$ de destituer ledit dispositif terminal de la prise de parole est exprimée de la manière suivante :

$$P_{fail} = 1 - \sum_{k=0}^{N-1} \binom{N-1}{k} P_{push}^k \left(1 - P_{push}\right)^{N-1-k} \left(1 - P'_{fail}\right)^k$$

où $P_{push}$ représente la probabilité pour un dispositif terminal de requérir la prise de parole déterminée par ledit dispositif super-noeud en comptant le nombre de 15 requêtes de prise de parole concurrentes détectées pour chaque prise de parole accordée, soit :

$$P_{push} = \left(\sum_{q=1}^{Q} \frac{R_q - 1}{N - 1}\right)/Q$$

où $R_q$ représente une quantité de requêtes concurrentes reçues pour chaque prise de parole accordée $q$ avec $R_q \geq 1$ et où $Q$ représente une quantité de prises de parole accordées considérée ; 20

et où :

$$P'_{fail} = \frac{Prob\{T_1 + d_1 + T_b < T_2 + d_2 \ \& \ T_1 > T_2\}}{Prob\{T_1 + d_1 < T_2 + d_2 \ \& \ T_1 > T_2\} + Prob\{T_1 + d_1 < T_2 + d_2 \ \& \ T_1 < T_2\}}$$

où : $Prob\{x\}$ représente la probabilité qu'une expression représentée par $x$ soit vérifiée et où $T_1$ est représentatif d'un instant auquel ladite première requête de prise de parole a été transmise, $T_2$ est représentatif de l'instant auquel une seconde requête de prise de parole plus prioritaire a été transmise, $d_1$ est représentatif d'une latence de transmission subie par ladite première requête de prise de parole dans le réseau de communication, $d_2$ est représentatif d'une latence de transmission subie par ladite seconde requête de prise de parole dans le réseau de communication, et $T_b$ est représentatif de la durée de la temporisation dont l'expiration déclenche la lecture de ladite mémoire tampon.

9. Procédé selon l'une quelconque des revendications 3 à 8, **caractérisé en ce que** chaque requête de prise de parole inclut une information représentative d'une période de temps écoulée entre un instant auquel un message de libération de parole a été reçu dans le cadre de la dernière prise de parole par le dispositif terminal ayant transmis ladite requête de prise de parole et l'instant auquel ledit dispositif terminal a transmis ladite requête.

10. Procédé selon la revendication 9, **caractérisé en ce que** ledit dispositif super-noeud considère qu'une dite seconde requête de prise de parole est temporellement plus prioritaire que ladite première requête de prise de parole lorsque la période de temps représentée par ladite information incluse dans ladite seconde requête de prise de parole est inférieure à ladite période de temps représentée par ladite information incluse dans ladite première requête de prise de parole.

11. Procédé selon l'une quelconque des revendications 3 à 10, **caractérisé en ce que**, pour déterminer la durée de ladite temporisation, le dispositif super-noeud effectue les étapes suivantes :

- déterminer une période de temps $t$ écoulée entre un instant auquel un message de libération de parole a été reçu dans le cadre de la dernière prise de parole par le dispositif terminal ayant transmis ladite première requête de prise de parole et l'instant auquel ledit dispositif terminal a transmis ladite première requête de prise de parole ;
- déterminer une latence $d$ subie par ladite première requête de prise de parole entre la transmission de ladite première requête de prise de parole par ledit dispositif terminal et la réception de ladite première requête de prise de parole par ledit dispositif super-noeud ; et
- déterminer la durée de ladite temporisation à partir d'une table de correspondance qui fournit une durée de temporisation en fonction d'un ensemble de couples $(t, d)$ prédéfinis, le contenu de la table de correspondance étant préalablement défini en fonction de la loi de distribution $f_\tau(t)$ et de la loi de distribution $f_\delta(d)$ concernée de sorte que la probabilité $P_{fail}$ de destituer un dispositif terminal de la prise de parole soit en dessous du premier seuil prédéfini.

12. Procédé selon la revendication 11, **caractérisé en ce que**, pour remplir la table de correspondance, un dispositif effectue les étapes suivantes :

- déterminer des paramètres permettant de représenter la loi de distribution $f_\tau(t)$ ;
- déterminer des paramètres permettant de représenter la loi de distribution $f_\delta(d)$ applicable ;
- déterminer une quantité de dispositifs terminaux présents dans le système de communication ;
- définir des valeurs minimum et maximum de période de temps $t$ entre une libération de parole et une prochaine prise de parole, et de latence réseau $d$ entre un instant auquel une requête de prise de parole est transmise par un dispositif terminal et un instant auquel ladite requête est effectivement reçue par ledit dispositif super-noeud ;
- définir un pas entre deux valeurs de période de temps $t$ successives à considérer et d'un pas entre deux valeurs de latence réseau $d$ successives à considérer, de manière à définir chaque couple $(t, d)$ à représenter dans la table de correspondance ;
- définir une valeur maximum acceptable pour la durée de la temporisation ;
- définir la valeur dudit premier seuil ;
- définir une marge d'erreur $\varepsilon$ acceptable ;
- déterminer par bissection, en fonction des lois de distribution $t_\tau(t)$ et $f_\delta(d)$, une durée de temporisation pour chaque couple $(t, d)$ à représenter dans la table de correspondance, de telle sorte que de sorte que la probabilité

$P_{fail}$ de destituer un dispositif terminal de la prise de parole soit à une distance du premier seuil prédéfini inférieure à ladite marge d'erreur $\varepsilon$ acceptable et que la durée de temporisation soit inférieure à ladite valeur maximum acceptable.

13. Procédé selon l'une quelconque des revendications 3 à 12, **caractérisé en ce que**, lorsqu'un message de libération de parole est reçu (402 ; 601) dudit dispositif terminal et que ledit dispositif terminal est sur le sous-réseau auquel ledit dispositif super-noeud est associé, ledit dispositif super-noeud effectue les étapes suivantes :

- propager (602) ledit message de libération de parole reçu à chaque autre dispositif super-noeud ;
- transmettre (606) un message de notification de libération de parole à chaque autre dispositif terminal du sous-réseau auquel le dispositif super-noeud est associé, après que la mémoire tampon ait été vidée ;
- libérer (605) la mémoire tampon ;

et lorsqu'un message de libération de parole est reçu (406 ;651) dudit dispositif terminal et que ledit dispositif terminal est sur un autre sous-réseau que celui auquel ledit dispositif super-noeud est associé, ledit dispositif super-noeud effectue les étapes suivantes :

- transmettre (655) un message de notification de libération de parole à chaque dispositif terminal du sous-réseau auquel le dispositif super-noeud est associé, après que la mémoire tampon ait été vidée ; et
- libérer (654) la mémoire tampon.

14. Procédé selon l'une quelconque des revendications 3 à 13, **caractérisé en ce que**, différentes configurations du réseau de communication étant possibles, ledit dispositif super-noeud sélectionne la loi de distribution $f_\tau(t)$ et la loi de distribution $f_\delta(d)$ parmi un ensemble prédéfini de lois de distribution, en fonction d'une configuration effective du réseau de communication.

15. Dispositif super-noeud (110) destiné à une gestion de prise de parole sur un canal de communication partagé dans le cadre de communications en alternat implémentées dans un réseau de communication composé d'une pluralité de sous-réseaux (101 ; 102) interconnectés, chaque sous-réseau étant associé à un dispositif super-noeud du réseau de communication, **caractérisé en ce que**, lorsqu'une première requête de prise de parole est reçue (302 ; 501) d'un dispositif terminal du sous-réseau auquel ledit dispositif super-noeud est associé et que ledit dispositif super-noeud n'a pas connaissance d'au moins une seconde requête de prise de parole plus prioritaire, ledit dispositif super-noeud inclut :

- des moyens pour propager (305 ; 505) la première requête de prise de parole à chaque autre dispositif super-noeud ;
- des moyens pour transmettre (303 ; 510) un message de pré-autorisation de prise de parole audit dispositif terminal de sorte à autoriser ledit dispositif terminal à prendre la parole ;
- des moyens pour transmettre (304 ; 509) un message de notification de pré-autorisation de prise de parole à chaque autre dispositif terminal du sous-réseau auquel le dispositif super-noeud est associé, de sorte à placer chaque dit autre dispositif terminal à l'écoute du canal de communication partagé ;
- des moyens pour déterminer (308 ; 506) une durée d'une temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ;
- des moyens pour stocker (311 ; 511) dans une mémoire tampon des données reçues en provenance dudit dispositif terminal dans le cadre de la prise de parole, et propager (312 ; 511) lesdites données à destination de chaque autre dispositif super-noeud ; et
- des moyens pour activer (314 ; 514) en lecture la mémoire tampon pour diffuser les données stockées à chaque dispositif terminal à l'écoute sur le sous-réseau associé audit dispositif super-noeud, lorsque ladite temporisation est écoulée ;

et **en ce que**, lorsque ledit dispositif super-noeud détecte (701) au moins une seconde requête de prise de parole plus prioritaire avant expiration de ladite temporisation, ledit dispositif super-noeud inclut :

- des moyens pour libérer (704) la mémoire tampon ; et

- des moyens pour notifier (705) ledit dispositif terminal que la prise de parole est refusée audit dispositif terminal.

**16.** Dispositif super-noeud (120) destiné à une gestion de prise de parole sur un canal de communication partagé dans le cadre de communications en alternat implémentées dans un réseau de communication composé d'une pluralité de sous-réseaux (101 ; 102) interconnectés, chaque sous-réseau étant associé à un dispositif super-noeud (110 ; 120) du réseau de communication, **caractérisé en ce que**, lorsqu'une première requête de prise de parole est reçue (306 ; 551) d'un dispositif terminal d'un autre sous-réseau que celui auquel ledit dispositif super-noeud est associé et que ledit dispositif super-noeud n'a pas connaissance d'au moins une seconde requête de prise de parole plus prioritaire, ledit dispositif super-noeud inclut :

- des moyens pour transmettre (307 ; 555) un message de notification de pré-autorisation de prise de parole à chaque dispositif terminal du sous-réseau auquel le dispositif super-noeud est associé, de sorte à placer chaque dispositif terminal dudit sous-réseau à l'écoute du canal de communication partagé ;
- des moyens pour déterminer (309 ; 556) la durée de la temporisation en fonction d'une loi de distribution $f_\tau(t)$ de période de temps entre une libération de parole et une prochaine prise de parole, et d'une loi de distribution $f_\delta(d)$ de latence réseau entre un instant auquel une requête de prise de parole est transmise par un dispositif terminal et un instant auquel ladite requête est effectivement reçue par ledit dispositif super-noeud, de sorte que la probabilité $P_{fail}$ de destituer ledit dispositif terminal de la prise de parole soit en dessous d'un seuil prédéfini ;
- des moyens pour stocker (313 ; 557) dans une mémoire tampon des données propagées par un autre dispositif super-noeud dans le cadre de la prise de parole ;
- des moyens pour activer (319 ; 560) en lecture la mémoire tampon pour diffuser les données stockées à chaque dispositif terminal à l'écoute sur le sous-réseau associé audit dispositif super-noeud, lorsque ladite temporisation est écoulée ;

et **en ce que**, lorsque ledit dispositif super-noeud détecte (701) au moins une seconde requête de prise de parole plus prioritaire avant expiration de ladite temporisation, ledit dispositif super-noeud inclut des moyens pour libérer (704) la mémoire tampon.

**17.** Dispositif super-noeud (120) destiné à une gestion de prise de parole sur un canal de communication partagé dans le cadre de communications en alternat implémentées dans un réseau de communication composé d'une pluralité de sous-réseaux (101 ; 102) interconnectés, ledit dispositif super-noeud étant conforme aux revendications 15 et 16.

**Patentansprüche**

**1.** Verfahren zur Verwaltung der Sprechreihenfolge über einen gemeinsam genutzten Kommunikationskanal im Rahmen von Halbduplex-Kommunikationen, die in einem aus mehreren miteinander verbundenen Teilnetzen (101; 102) bestehenden Kommunikationsnetz implementiert werden, wobei jedes Teilnetz einer Superknoten-Vorrichtung (110; 120) des Kommunikationsnetzes zugeordnet ist, wobei das Verfahren von einer solchen Superknoten-Vorrichtung (110) durchgeführt wird, **dadurch gekennzeichnet, dass**, wenn eine erste Sprechanforderung von einem Endgerät des Teilnetzes, dem die Superknoten-Vorrichtung zugeordnet ist, empfangen wird (302; 501), und wenn die Superknoten-Vorrichtung nicht Kenntnis von wenigstens einer zweiten Sprechanforderung mit höherer Priorität hat, die Superknoten-Vorrichtung die folgenden Schritte ausführt:

- Weiterleiten (305; 505) der ersten Sprechanforderung an jede andere Superknoten-Vorrichtung;
- Senden (303; 510) einer Vorautorisierungsnachricht zum Sprechen an das Endgerät, um das Endgerät zum Sprechen zu autorisieren;
- Senden (304; 509) einer Benachrichtigungsnachricht über die Vorautorisierung zum Sprechen an jedes andere Endgerät des Teilnetzes, dem die Superknoten-Vorrichtung zugeordnet ist, um zu bewirken, dass jedes solche andere Endgerät auf dem gemeinsam genutzten Kommunikationskanal auf Empfang geht;
- Bestimmen (308; 506) einer Dauer einer Verzögerung in Abhängigkeit von einem Verteilungsgesetz $f_\tau(t)$ der Zeitspanne zwischen einer Kanalfreigabe und einem nächsten Sprechvorgang und von einem Verteilungsgesetz $f_\delta(d)$ der Netzlatenz zwischen einem Zeitpunkt, zu dem eine Sprechanforderung von einem Endgerät gesendet wird, und einem Zeitpunkt, zu dem die Anforderung tatsächlich durch die Superknoten-Vorrichtung empfangen wird, so dass die Wahrscheinlichkeit $P_{fail}$, dass dem Endgerät das Sprechen verwehrt wird, unter einem vordefinierten Schwellenwert liegt;
- Speichern (311; 511) der im Rahmen des Sprechvorgangs empfangenen, von dem Endgerät stammenden Daten in einem Pufferspeicher und Weiterleiten (312; 511) dieser Daten an jede andere Superknoten-Vorrichtung; und
- Aktivieren (314; 514) des Auslesens aus dem Pufferspeicher, um die gespeicherten Daten an jedes Endgerät in dem der Superknoten-Vorrichtung zugeordneten Teilnetz zu senden, das auf Empfang ist, wenn die Verzögerung abgelaufen ist;

und dadurch, dass, wenn die Superknoten-Vorrichtung vor Ablauf der Verzögerung wenigstens eine zweite Sprechanforderung erkennt (701), die eine höhere Priorität hat, die Superknoten-Vorrichtung die folgenden Schritte ausführt:

- Freigeben (704) des Pufferspeichers; und
- Benachrichtigen (705) des Endgerätes, dass dem Endgerät das Sprechen verweigert wird.

**2.** Verfahren zur Verwaltung der Sprechreihenfolge über einen gemeinsam genutzten Kommunikationskanal im Rahmen von Halbduplex-Kommunikationen, die in einem aus mehreren miteinander verbundenen Teilnetzen (101; 102) bestehenden Kommunikationsnetz implementiert werden, wobei jedes Teilnetz einer Superknoten-Vorrichtung (110; 120) des Kommunikationsnetzes zugeordnet ist, wobei das Verfahren von einer solchen Superknoten-Vorrichtung (120) durchgeführt wird, **dadurch gekennzeichnet, dass**, wenn eine erste Sprechanforderung von einem Endgerät eines anderen Teilnetzes als desjenigen, dem die Superknoten-Vorrichtung zugeordnet ist, empfangen wird (306; 551), und wenn die Superknoten-Vorrichtung nicht Kenntnis von wenigstens einer zweiten Sprechanforderung mit höherer Priorität hat, die Superknoten-Vorrichtung die folgenden Schritte ausführt:

- Senden (307; 555) einer Benachrichtigungsnachricht über die Vorautorisierung zum Sprechen an jedes Endgerät des Teilnetzes, dem die Superknoten-Vorrichtung zugeordnet ist, um zu bewirken, dass jedes Endgerät des Teilnetzes auf dem gemeinsam genutzten Kommunikationskanal auf Empfang geht;
- Bestimmen (309; 556) der Dauer der Verzögerung in Abhängigkeit von einem Verteilungsgesetz $f_\tau(t)$ der Zeitspanne zwischen einer Kanalfreigabe und einem nächsten Sprechvorgang und von einem Verteilungsgesetz $f_\delta(d)$ der Netzlatenz zwischen einem Zeitpunkt, zu dem eine Sprechanforderung von einem Endgerät gesendet wird, und einem Zeitpunkt, zu dem die Anforderung tatsächlich durch die Superknoten-Vorrichtung empfangen wird, so dass die Wahrscheinlichkeit $P_{fail}$, dass dem Endgerät das Sprechen verwehrt wird, unter einem vordefinierten Schwellenwert liegt;
- Speichern (313; 557) der von einer anderen Superknoten-Vorrichtung im Rahmen des Sprechvorgangs weitergeleiteten Daten in einem Pufferspeicher;
- Aktivieren (319; 560) des Auslesens aus dem Pufferspeicher, um die gespeicherten Daten an jedes Endgerät in dem der Superknoten-Vorrichtung zugeordneten Teilnetz zu senden, das auf Empfang ist, wenn die Verzögerung abgelaufen ist;

und dadurch, dass, wenn die Superknoten-Vorrichtung vor Ablauf der Verzögerung wenigstens eine zweite Sprechanforderung erkennt (701), die eine höhere Priorität hat, die Superknoten-Vorrichtung den Pufferspeicher freigibt (704).

**3.** Verfahren zur Verwaltung der Sprechreihenfolge über einen gemeinsam genutzten Kommunikationskanal im Rahmen von Halbduplex-Kommunikationen, die in einem Kommunikationsnetz implementiert werden, das aus mehreren miteinander verbundenen Teilnetzen (101; 102) besteht, wobei das Verfahren von einer Superknoten-Vorrichtung (120) gemäß den Ansprüchen 1 und 2 durchgeführt wird.

**4.** Verfahren nach Anspruch 3, **dadurch gekennzeichnet, dass** die Superknoten-Vorrichtung die Vorautorisierungsnachricht zum Sprechen nach Ablauf einer weiteren Verzögerung von bestimmter Dauer (507) in Abhängigkeit von dem Verteilungsgesetz $f_\tau(t)$ und dem Verteilungsgesetz $f_\delta(d)$ sendet, so dass die Wahrscheinlichkeit, dass dem Endgerät das Sprechen verwehrt wird, unter einem zweiten vordefinierten Schwellenwert liegt, der streng größer als der erste Schwellenwert ist.

**5.** Verfahren nach einem der Ansprüche 3 und 4, **dadurch gekennzeichnet, dass** das Verteilungsgesetz $f_\tau(t)$ durch ein Modell der logarithmischen Normalverteilung definiert ist und wie folgt ausgedrückt werden kann:

$$f_\tau(t) = \frac{1}{t\,\sigma\,\sqrt{2\pi}}\,e^{-\frac{(log(t)-\mu)^2}{2\sigma^2}}$$

wobei $\sigma$ die Standardabweichung des Verteilungsgesetzes $f_\tau(t)$ bezeichnet und $\mu$ den Mittelwert des Verteilungsgesetzes $f_\tau(t)$ bezeichnet.

6. Verfahren nach einem der Ansprüche 3 bis 5, **dadurch gekennzeichnet, dass** das Verteilungsgesetz $f_\delta(d)$ durch ein Modell in Form einer Mischung von Weibull-Verteilungen mit drei Parametern definiert ist und wie folgt ausgedrückt werden kann:

$$f_\delta(d) = \sum_i q_i f_{\delta_i}(d),$$

wobei i ein Index der Komponenten der Mischung ist und wobei $q_i$ Gewichtungskoeffizienten bezeichnet, für welche gilt

$$\sum_i q_i = 1,$$

und wobei

$$f_{\delta_i}(d) = \frac{s_i}{r_i} \left(\frac{d-l_i}{r_i}\right)^{s_i-1} e^{-\left(\frac{d-l_i}{r_i}\right)^{s_i}}$$

für $d \geq l_i$, wobei $s_i$ ein Formparameter ist, $r_i$ ein Maßstabsparameter ist und $l_i$ ein Lokalisierungsparameter ist.

7. Verfahren nach einem der Ansprüche 3 und 4, **dadurch gekennzeichnet, dass** die Verteilungsgesetze $f_\tau(t)$ und $f_\delta(d)$ durch die Superknoten-Vorrichtung in Abhängigkeit von Langzeitstatistiken vorbestimmt werden, die zuvor im Verlaufe des Nachrichtenaustauschs im Rahmen der Halbduplex-Kommunikationen gesammelt wurden.

8. Verfahren nach einem der Ansprüche 3 bis 7, **dadurch gekennzeichnet, dass** die Wahrscheinlichkeit $P_{fail}$, dass dem Endgerät das Sprechen verwehrt wird, wie folgt ausgedrückt werden kann:

$$P_{fail} = 1 - \sum_{k=0}^{N-1} \binom{N-1}{k} P_{push}{}^k \left(1 - P_{push}\right)^{N-1-k} \left(1 - P'_{fail}\right)^k$$

wobei $P_{push}$ die Wahrscheinlichkeit darstellt, dass ein Endgerät einen Sprechvorgang anfordert, die von der Superknoten-Vorrichtung bestimmt wird, indem sie die Anzahl gleichzeitiger Sprechanforderungen zählt, die für jeden genehmigten Sprechvorgang erkannt werden, nämlich:

$$P_{push} = \left(\sum_{q=1}^{Q} \frac{R_q - 1}{N - 1}\right) / Q$$

wobei $R_q$ eine Anzahl von gleichzeitigen Anforderungen bezeichnet, die für jeden genehmigten Sprechvorgang $q$ empfangen werden, mit $R_q \geq 1$, und wobei Q eine betrachtete Anzahl von genehmigten Sprechvorgängen bezeichnet; und wobei:

$$P'_{fail} = \frac{Prob\{T_1 + d_1 + T_b < T_2 + d_2 \,\&\, T_1 > T_2\}}{Prob\{T_1 + d_1 < T_2 + d_2 \,\&\, T_1 > T_2\} + Prob\{T_1 + d_1 < T_2 + d_2 \,\&\, T_1 < T_2\}}$$

wobei: *Prob{x}* die Wahrscheinlichkeit bezeichnet, dass ein durch *x* dargestellter Ausdruck erfüllt ist, und wobei $T_1$ für einen Zeitpunkt repräsentativ ist, zu dem die erste Sprechanforderung gesendet worden ist, $T_2$ für einen Zeitpunkt repräsentativ ist, zu dem eine zweite Sprechanforderung mit höherer Priorität gesendet worden ist, $d_1$ für eine Übertragungslatenz repräsentativ ist, der die erste Sprechanforderung im Kommunikationsnetz unterliegt, $d_2$ für eine Übertragungslatenz repräsentativ ist, der die zweite Sprechanforderung im Kommunikationsnetz unterliegt, und $T_b$ für die Dauer der Verzögerung repräsentativ ist, deren Ablauf das Lesen des Pufferspeichers auslöst.

9. Verfahren nach einem der Ansprüche 3 bis 8, **dadurch gekennzeichnet, dass** jede Sprechanforderung eine Information beinhaltet, die für eine Zeitspanne repräsentativ ist, die zwischen einem Zeitpunkt, zu dem eine Kanalfreigabe-Nachricht im Rahmen des letzten Sprechvorgangs durch das Endgerät, das die Sprechanforderung gesendet hat, empfangen worden ist, und dem Zeitpunkt, zu dem das Endgerät die Anforderung gesendet hat, vergangen ist.

10. Verfahren nach Anspruch 9, **dadurch gekennzeichnet, dass** die Superknoten-Vorrichtung der Ansicht ist, dass eine besagte zweite Sprechanforderung zeitlich eine höhere Priorität hat als die erste Sprechanforderung, wenn die Zeitspanne, die durch die in der zweiten Sprechanforderung enthaltene Information dargestellt wird, kürzer als die Zeitspanne ist, die durch die in der ersten Sprechanforderung enthaltene Information dargestellt wird.

11. Verfahren nach einem der Ansprüche 3 bis 10, **dadurch gekennzeichnet, dass**, um die Dauer der Verzögerung zu bestimmen, die Superknoten-Vorrichtung die folgenden Schritte ausführt:

   - Bestimmen einer Zeitspannt *t*, die zwischen einem Zeitpunkt, zu dem eine Kanalfreigabe-Nachricht im Rahmen des letzten Sprechvorgangs durch das Endgerät, das die erste Sprechanforderung gesendet hat, empfangen worden ist, und dem Zeitpunkt, zu dem das Endgerät die erste Sprechanforderung gesendet hat, vergangen ist;
   - Bestimmen einer Latenz *d*, der die erste Sprechanforderung zwischen dem Senden der ersten Sprechanforderung durch das Endgerät und dem Empfang der ersten Sprechanforderung durch die Superknoten-Vorrichtung unterliegt; und
   - Bestimmen der Dauer der Verzögerung anhand einer Entsprechungstabelle, welche eine Verzögerungsdauer in Abhängigkeit von einer Menge von vordefinierten Paaren (*t, d*) liefert, wobei der Inhalt der Entsprechungstabelle zuvor in Abhängigkeit von dem Verteilungsgesetz $f_\tau(t)$ und dem betreffenden Verteilungsgesetz $f_\delta(d)$ so definiert wird, dass die Wahrscheinlichkeit $P_{fail}$, dass einem Endgerät das Sprechen verwehrt wird, unter dem vordefinierten Schwellenwert liegt.

12. Verfahren nach Anspruch 11, **dadurch gekennzeichnet, dass**, um die Entsprechungstabelle zu füllen, eine Vorrichtung die folgenden Schritte ausführt:

   - Bestimmen von Parametern, die es gestatten, das Verteilungsgesetz $f_\tau(t)$ darzustellen;
   - Bestimmen von Parametern, die es gestatten, das zutreffende Verteilungsgesetz $f_\delta(d)$ darzustellen;
   - Bestimmen einer Anzahl von Endgeräten, die in dem Kommunikationssystem vorhanden sind;
   - Definieren eines minimalen und eines maximalen Wertes der Zeitspanne t zwischen einer Kanalfreigabe und einem nächsten Sprechvorgang und der Netzlatenz d zwischen einem Zeitpunkt, zu dem eine Sprechanforderung von einem Endgerät gesendet wird, und einem Zeitpunkt, zu dem die Anforderung tatsächlich durch die Superknoten-Vorrichtung empfangen wird;
   - Definieren einer Schrittweite zwischen zwei aufeinander folgenden Werten der Zeitspanne t, die betrachtet werden sollen, und einer Schrittweite zwischen zwei aufeinander folgenden Werten der Netzlatenz *d*, die betrachtet werden sollen, so dass jedes Paar (*t, d*) definiert wird, das in der Entsprechungstabelle dargestellt werden soll;
   - Definieren eines zulässigen maximalen Wertes für die Dauer der Verzögerung;
   - Definieren des Wertes des ersten Schwellenwertes;
   - Definieren einer zulässigen Fehlerspanne $\varepsilon$;
   - Bestimmen, durch Bisektion, in Abhängigkeit von den Verteilungsgesetzen $f_\tau(t)$ und $f_\delta(d)$, einer Verzögerungsdauer für jedes Paar (*t, d*), das in der Entsprechungstabelle dargestellt werden soll, derart, dass die Wahrscheinlichkeit $P_{fail}$, dass einem Endgerät das Sprechen verwehrt wird, einen Abstand von dem vordefinierten ersten Schwellenwert hat, der kleiner als die zulässige Fehlerspanne $\varepsilon$ ist, und dass die Verzögerungsdauer kleiner als der zulässige maximale Wert ist.

13. Verfahren nach einem der Ansprüche 3 bis 12, **dadurch gekennzeichnet, dass**, wenn eine Kanalfreigabe-Nachricht von dem Endgerät empfangen wird (402; 601) und wenn sich das Endgerät in dem Teilnetz befindet, dem die Superknoten-Vorrichtung zugeordnet ist, die Superknoten-Vorrichtung die folgenden Schritte ausführt:

- Weiterleiten (602) der empfangenen Kanalfreigabe-Nachricht an jede andere Superknoten-Vorrichtung;
- Senden (606) einer Benachrichtigungsnachricht über die Kanalfreigabe an jedes andere Endgerät des Teilnetzes, dem die Superknoten-Vorrichtung zugeordnet ist, nachdem der Pufferspeicher geleert worden ist;
- Freigeben (605) des Pufferspeichers;

und wenn eine Kanalfreigabe-Nachricht von dem Endgerät empfangen wird (406; 651) und wenn sich das Endgerät in einem anderen Teilnetz befindet als demjenigen, dem die Superknoten-Vorrichtung zugeordnet ist, die Superknoten-Vorrichtung die folgenden Schritte ausführt:

- Senden (655) einer Benachrichtigungsnachricht über die Kanalfreigabe an jedes Endgerät des Teilnetzes, dem die Superknoten-Vorrichtung zugeordnet ist, nachdem der Pufferspeicher geleert worden ist; und
- Freigeben (654) des Pufferspeichers.

14. Verfahren nach einem der Ansprüche 3 bis 13, **dadurch gekennzeichnet, dass**, wenn verschiedene Konfigurationen des Kommunikationsnetzes möglich sind, die Superknoten-Vorrichtung das Verteilungsgesetz $f_\tau(t)$ und das Verteilungsgesetz $f_\delta(d)$ aus einer vordefinierten Menge von Verteilungsgesetzen in Abhängigkeit von einer tatsächlichen Konfiguration des Kommunikationsnetzes auswählt.

15. Superknoten-Vorrichtung (110), welche zur Verwaltung der Sprechreihenfolge über einen gemeinsam genutzten Kommunikationskanal im Rahmen von Halbduplex-Kommunikationen, die in einem aus mehreren miteinander verbundenen Teilnetzen (101; 102) bestehenden Kommunikationsnetz implementiert werden, bestimmt ist, wobei jedes Teilnetz einer Superknoten-Vorrichtung des Kommunikationsnetzes zugeordnet ist, **dadurch gekennzeichnet, dass**, wenn eine erste Sprechanforderung von einem Endgerät des Teilnetzes, dem die Superknoten-Vorrichtung zugeordnet ist, empfangen wird (302; 501), und wenn die Superknoten-Vorrichtung nicht Kenntnis von wenigstens einer zweiten Sprechanforderung mit höherer Priorität hat, die Superknoten-Vorrichtung aufweist:

- Mittel zum Weiterleiten (305; 505) der ersten Sprechanforderung an jede andere Superknoten-Vorrichtung;
- Mittel zum Senden (303; 510) einer Vorautorisierungsnachricht zum Sprechen an das Endgerät, um das Endgerät zum Sprechen zu autorisieren;
- Mittel zum Senden (304; 509) einer Benachrichtigungsnachricht über die Vorautorisierung zum Sprechen an jedes andere Endgerät des Teilnetzes, dem die Superknoten-Vorrichtung zugeordnet ist, um zu bewirken, dass jedes solche andere Endgerät auf dem gemeinsam genutzten Kommunikationskanal auf Empfang geht;
- Mittel zum Bestimmen (308; 506) einer Dauer einer Verzögerung in Abhängigkeit von einem Verteilungsgesetz $f_\tau(t)$ der Zeitspanne zwischen einer Kanalfreigabe und einem nächsten Sprechvorgang und von einem Verteilungsgesetz $f_\delta(d)$ der Netzlatenz zwischen einem Zeitpunkt, zu dem eine Sprechanforderung von einem Endgerät gesendet wird, und einem Zeitpunkt, zu dem die Anforderung tatsächlich durch die Superknoten-Vorrichtung empfangen wird, so dass die Wahrscheinlichkeit $P_{fail}$, dass dem Endgerät das Sprechen verwehrt wird, unter einem vordefinierten Schwellenwert liegt;
- Mittel zum Speichern (311; 511) der im Rahmen des Sprechvorgangs empfangenen, von dem Endgerät stammenden Daten in einem Pufferspeicher und Weiterleiten (312; 511) dieser Daten an jede andere Superknoten-Vorrichtung; und
- Mittel zum Aktivieren (314; 514) des Auslesens aus dem Pufferspeicher, um die gespeicherten Daten an jedes Endgerät in dem der Superknoten-Vorrichtung zugeordneten Teilnetz zu senden, das auf Empfang ist, wenn die Verzögerung abgelaufen ist;

und dadurch, dass, wenn die Superknoten-Vorrichtung vor Ablauf der Verzögerung wenigstens eine zweite Sprechanforderung erkennt (701), die eine höhere Priorität hat, die Superknoten-Vorrichtung aufweist:

- Mittel zum Freigeben (704) des Pufferspeichers; und
- Mittel zum Benachrichtigen (705) des Endgerätes, dass dem Endgerät das Sprechen verweigert wird.

16. Superknoten-Vorrichtung (120), welche zur Verwaltung der Sprechreihenfolge über einen gemeinsam genutzten Kommunikationskanal im Rahmen von Halbduplex-Kommunikationen, die in einem aus mehreren miteinander verbundenen Teilnetzen (101; 102) bestehenden Kommunikationsnetz implementiert werden, bestimmt ist, wobei jedes Teilnetz einer Superknoten-Vorrichtung (110; 120) des Kommunikationsnetzes zugeordnet ist, **dadurch gekennzeichnet, dass**, wenn eine erste Sprechanforderung von einem Endgerät eines anderen Teilnetzes als desjenigen, dem die Superknoten-Vorrichtung zugeordnet ist, empfangen wird (306; 551), und wenn die Superknoten-Vorrichtung nicht Kenntnis von wenigstens einer zweiten Sprechanforderung mit höherer Priorität hat, die Superknoten-Vorrichtung aufweist:

- Mittel zum Senden (307; 555) einer Benachrichtigungsnachricht über die Vorautorisierung zum Sprechen an jedes Endgerät des Teilnetzes, dem die Superknoten-Vorrichtung zugeordnet ist, um zu bewirken, dass jedes Endgerät des Teilnetzes auf dem gemeinsam genutzten Kommunikationskanal auf Empfang geht;
- Mittel zum Bestimmen (309; 556) der Dauer der Verzögerung in Abhängigkeit von einem Verteilungsgesetz $f_\tau(t)$ der Zeitspanne zwischen einer Kanalfreigabe und einem nächsten Sprechvorgang und von einem Verteilungsgesetz $f_\delta(d)$ der Netzlatenz zwischen einem Zeitpunkt, zu dem eine Sprechanforderung von einem Endgerät gesendet wird, und einem Zeitpunkt, zu dem die Anforderung tatsächlich durch die Superknoten-Vorrichtung empfangen wird, so dass die Wahrscheinlichkeit $P_{fail}$, dass dem Endgerät das Sprechen verwehrt wird, unter einem vordefinierten Schwellenwert liegt;
- Mittel zum Speichern (313; 557) der von einer anderen Superknoten-Vorrichtung im Rahmen des Sprechvorgangs weitergeleiteten Daten in einem Pufferspeicher;
- Mittel zum Aktivieren (319; 560) des Auslesens aus dem Pufferspeicher, um die gespeicherten Daten an jedes Endgerät in dem der Superknoten-Vorrichtung zugeordneten Teilnetz zu senden, das auf Empfang ist, wenn die Verzögerung abgelaufen ist;

und dadurch, dass, wenn die Superknoten-Vorrichtung vor Ablauf der Verzögerung wenigstens eine zweite Sprechanforderung erkennt (701), die eine höhere Priorität hat, die Superknoten-Vorrichtung Mittel zum Freigeben (704) des Pufferspeichers aufweist.

17. Superknoten-Vorrichtung (120), welche zur Verwaltung der Sprechreihenfolge über einen gemeinsam genutzten Kommunikationskanal im Rahmen von Halbduplex-Kommunikationen, die in einem aus mehreren miteinander verbundenen Teilnetzen (101; 102) bestehenden Kommunikationsnetz implementiert werden, bestimmt ist, wobei die Superknoten-Vorrichtung gemäß den Ansprüchen 15 und 16 ausgelegt ist.

## Claims

1. Method for managing turns to speak over a shared communication channel within the framework of half-duplex communications implemented in a communication network composed of a plurality of interconnected sub-networks (101; 102), each sub-network being associated with a super-node device (110; 120) of the communication network, the method being implemented by a so-called super-node device (110), **characterized in that**, when a first request for a turn to speak is received (302; 501) from a terminal device of the sub-network with which the said super-node device is associated and the said super-node device is not aware of at least one second request for a turn to speak of higher priority, the said super-node device performs the following steps:

- propagate (305; 505) the first request for a turn to speak to each other super-node device;
- transmit (303; 510) a turn to speak pre-authorization message to the said terminal device so as to authorize the said terminal device to take a turn to speak;
- transmit (304; 509) a turn to speak pre-authorization notification message to each other terminal device of the sub-network with which the super-node device is associated, so as to make each said other terminal device listen to the shared communication channel;
- determine (308; 506) a duration of a timeout as a function of a law of distribution $f_\tau(t)$ of the time period between a release from speaking and a next turn to speak, and of a law of distribution $f_\delta(d)$ of network latency between an instant at which a request for a turn to speak is transmitted by a terminal device and an instant at which the said request is actually received by the said super-node device, so that the probability $P_{fail}$ of removing the said terminal device from the turn to speak is below a predefined threshold;
- store (311; 511) in a buffer memory data received originating from the said terminal device within the framework of the turn to speak, and propagate (312; 511) the said data destined for each other super-node device; and
- read-activate (314; 514) the buffer memory so as to disseminate the stored data to each terminal device listening on the sub-network associated with the said super-node device, when the said timeout has elapsed;

and **in that**, when the said super-node device detects (701) at least one second request for a turn to speak of higher priority before expiry of the said timeout, the said super-node device performs the following steps:

- release (704) the buffer memory; and
- notify (705) the said terminal device that the turn to speak is denied to the said terminal device.

2. Method for managing turns to speak over a shared communication channel within the framework of half-duplex communications implemented in a communication network composed of a plurality of interconnected sub-networks (101; 102), each sub-network being associated with a super-node device (110; 120) of the communication network, the method being implemented by a so-called super-node device (120),
**characterized in that**, when a first request for a turn to speak is received (306; 551) from a terminal device of a sub-network other than that with which the said super-node device is associated and the said super-node device is not aware of at least one second request for a turn to speak of higher priority, the said super-node device performs the following steps:

- transmit (307; 555) a turn to speak pre-authorization notification message to each terminal device of the sub-network with which the super-node device is associated, so as to make each terminal device of the said sub-network listen to the shared communication channel;
- determine (309; 556) the duration of the timeout as a function of a law of distribution $f_\tau(t)$ of the time period between a release from speaking and a next turn to speak, and of a law of distribution $f_\delta(d)$ of network latency between an instant at which a request for a turn to speak is transmitted by a terminal device and an instant at which the said request is actually received by the said super-node device, so that the probability $P_{fail}$ of removing the said terminal device from the turn to speak is below a predefined threshold;
- store (313; 557) in a buffer memory data propagated by another super-node device within the framework of the turn to speak;
- read-activate (319; 560) the buffer memory so as to disseminate the stored data to each terminal device listening on the sub-network associated with the said super-node device, when the said timeout has elapsed;

and **in that**, when the said super-node device detects (701) at least one second request for a turn to speak of higher priority before expiry of the said timeout, the said super-node device releases (704) the buffer memory.

3. Method for managing turns to speak over a shared communication channel within the framework of half-duplex communications implemented in a communication network composed of a plurality of interconnected sub-networks (101, 102), the method being implemented by a super-node device (120) in accordance with Claims 1 and 2.

4. Method according to Claim 3, **characterized in that** the said super-node device transmits the turn to speak pre-authorization message after expiry of another timeout of determined duration (507) as a function of the distribution law $f_\tau(t)$ and of the distribution law $f_\delta(d)$, so that the probability of removing the said terminal device from the turn to speak is below a second predefined threshold strictly greater than the said first threshold.

5. Method according to either one of Claims 3 and 4, **characterized in that** the distribution law $f_\tau(t)$ is defined by a model of log-normal type and expressed in the following manner:

$$f_\tau(t) = \frac{1}{t\,\sigma\,\sqrt{2\pi}}\,e^{-\frac{(log(t)-\mu)^2}{2\sigma^2}}$$

where $\sigma$ represents the standard deviation of the distribution law $f_\tau(t)$ and $\mu$ represents the mean of the distribution law $f_\tau(t)$.

6. Method according to any one of Claims 3 to 5, **characterized in that** the distribution law $f_\delta(d)$ is defined by a model in the form of a mixture of three-parameter Weibull distribution laws and expressed in the following manner:

$$f_\delta(d) = \sum_i q_i f_{\delta_i}(d)$$

where i is an index over the components of the mixture and where $q_i$ represents weighting coefficients such that:

$$\sum_i q_i = 1$$

and where:

$$f_{\delta_i}(d) = \frac{s_i}{r_i}\left(\frac{d - l_i}{r_i}\right)^{s_i - 1} e^{-\left(\frac{d-l_i}{r_i}\right)^{s_i}} \quad for \ d \geq l_i$$

where $s_i$ is a shape parameter, $r_i$ a scale parameter and $l_i$ a location parameter.

7.  Method according to either one of Claims 3 and 4, **characterized in that** the distribution laws $f_r(t)$ and $f_\delta(d)$ are predetermined by the said super-node device as a function of long-term statistics previously gathered during exchanges of messages within the framework of the half-duplex communications.

8.  Method according to any one of Claims 3 to 7, **characterized in that** the probability $P_{fail}$ of removing the said terminal device from the turn to speak is expressed in the following manner:

$$P_{fail} = 1 - \sum_{k=0}^{N-1} \binom{N-1}{k} P_{push}{}^k \left(1 - P_{push}\right)^{N-1-k} \left(1 - P'_{fail}\right)^k$$

where $P_{push}$ represents the probability of a terminal device requesting the turn to speak determined by the said super-node device by counting the number of competing requests for a turn to speak that are detected for each turn to speak accorded, i.e.:

$$P_{push} = \left(\sum_{q=1}^{Q} \frac{R_q - 1}{N - 1}\right)/Q$$

where $R_q$ represents a quantity of competing requests received for each turn to speak accorded $q$ with $R_q \geq 1$ and where Q represents a considered quantity of turns to speak accorded;
and where:

$$P'_{fail} = \frac{Prob\{T_1 + d_1 + T_b < T_2 + d_2 \ \& \ T_1 > T_2\}}{Prob\{T_1 + d_1 < T_2 + d_2 \ \& \ T_1 > T_2\} + Prob\{T_1 + d_1 < T_2 + d_2 \ \& \ T_1 < T_2\}}$$

where: *Prob{x}* represents the probability that an expression represented by x is satisfied and where $T_1$ is representative of an instant at which the said first request for a turn to speak has been transmitted, $T_2$ is representative of the instant at which a second request for a turn to speak of higher priority has been transmitted, $d_1$ is representative of a transmission latency experienced by the said first request for a turn to speak in the communication network, $d_2$ is representative of a transmission latency experienced by the said second request for a turn to speak in the communication network, and Tb is representative of the duration of the timeout whose expiry triggers the reading of the said buffer memory.

9.  Method according to any one of Claims 3 to 8, **characterized in that** each request for a turn to speak includes an information item representative of a time period elapsed between an instant at which a release from speaking message has been received within the framework of the last turn to speak by the terminal device that transmitted the said request for a turn to speak and the instant at which the said terminal device has transmitted the said request.

10. Method according to Claim 9, **characterized in that** the said super-node device considers that a said second request for a turn to speak is temporally of higher priority than the said first request for a turn to speak when the time period represented by the said information item included in the said second request for a turn to speak is smaller than the said time period represented by the said information item included in the said first request for a turn to speak.

11. Method according to any one of Claims 3 to 10, **characterized in that**, to determine the duration of the said timeout, the super-node device performs the following steps:

- determine a time period t elapsed between an instant at which a release from speaking message has been received within the framework of the last turn to speak by the terminal device that transmitted the said first request for a turn to speak and the instant at which the said terminal device has transmitted the said first request for a turn to speak;
- determine a latency d experienced by the said first request for a turn to speak between the transmission of the said first request for a turn to speak by the said terminal device and the reception of the said first request for a turn to speak by the said super-node device; and
- determine the duration of the said timeout on the basis of a correspondence table which provides a duration of timeout as a function of a set of predefined pairs (t, d), the content of the correspondence table being previously defined as a function of the distribution law $f_\tau(t)$ and of the distribution law $f_\delta(d)$ concerned so that the probability $P_{fail}$ of removing a terminal device from the turn to speak is below the first predefined threshold.

12. Method according to Claim 11, **characterized in that**, to fulfil the correspondence table, a device performs the following steps:

- determine parameters making it possible to represent the distribution law $f_\tau(t)$;
- determine parameters making it possible to represent the applicable distribution law $f_\delta(d)$;
- determine a quantity of terminal devices present in the communication system;
- define minimum and maximum values of time period t between a release from speaking and a next turn to speak, and of network latency d between an instant at which a request for a turn to speak is transmitted by a terminal device and an instant at which the said request is actually received by the said super-node device;
- define a spacing between two successive values of time period t to be considered and of a spacing between two successive values of network latency d to be considered, so as to define each pair (t, d) to be represented in the correspondence table;
- define an acceptable maximum value for the duration of the timeout;
- define the value of the said first threshold;
- define an acceptable error margin $\varepsilon$;
- determine by bisection, as a function of the distribution laws $f_\tau(t)$ and $f_\delta(d)$, a duration of timeout for each pair (t, d) to be represented in the correspondence table, in such a way that so that the probability $P_{fail}$ of removing a terminal device from the turn to speak is at a smaller distance from the first predefined threshold than the said acceptable error margin $\varepsilon$ and that the duration of timeout is smaller than the said acceptable maximum value.

13. Method according to any one of Claims 3 to 12, **characterized in that**, when a release from speaking message is received (402; 601) from the said terminal device and the said terminal device is on the sub-network with which the said super-node device is associated, the said super-node device performs the following steps:

- propagate (602) the said release from speaking message received to each other super-node device;
- transmit (606) a release from speaking notification message to each other terminal device of the sub-network with which the super-node device is associated, after the buffer memory has been emptied;
- release (605) the buffer memory;

and when a release from speaking message is received (406; 651) from the said terminal device and the said terminal device is on a sub-network other than with which the said super-node device is associated, the said super-node device performs the following steps:

- transmit (655) a release from speaking notification message to each terminal device of the sub-network with which the super-node device is associated, after the buffer memory has been emptied; and
- release (654) the buffer memory.

14. Method according to any one of Claims 3 to 13, **characterized in that**, various configurations of the communication network being possible, the said super-node device selects the distribution law $f_\tau(t)$ and the distribution law $f_\delta(d)$ from among a predefined set of distribution laws, as a function of an actual configuration of the communication network.

15. Super-node device (110) intended for managing turns to speak over a shared communication channel within the framework of half-duplex communications implemented in a communication network composed of a plurality of interconnected sub-networks (101; 102), each sub-network being associated with a super-node device of the communication network, **characterized in that**, when a first request for a turn to speak is received (302; 501) from a terminal device of the sub-network with which the said super-node device is associated and the said super-node device is not aware of at least one second request for a turn to speak of higher priority, the said super-node device includes:

- means for propagating (305; 505) the first request for a turn to speak to each other super-node device;
- means for transmitting (303; 510) a turn to speak pre-authorization message to the said terminal device so as to authorize the said terminal device to take a turn to speak;
- means for transmitting (304; 509) a turn to speak pre-authorization notification message to each other terminal device of the sub-network with which the super-node device is associated, so as to make each said other terminal device listen to the shared communication channel;
- means for determining (308; 506) a duration of a timeout as a function of a law of distribution $f_\tau(t)$ of the time period between a release from speaking and a next turn to speak, and of a law of distribution $f_\delta(d)$ of network latency between an instant at which a request for a turn to speak is transmitted by a terminal device and an instant at which the said request is actually received by the said super-node device, so that the probability $P_{fail}$ of removing the said terminal device from the turn to speak is below a predefined threshold;
- means for storing (311; 511) in a buffer memory data received originating from the said terminal device within the framework of the turn to speak, and for propagating (312; 511) the said data destined for each other super-node device; and
- means for read-activating (314; 514) the buffer memory so as to disseminate the stored data to each terminal device listening on the sub-network associated with the said super-node device, when the said timeout has elapsed;

and **in that**, when the said super-node device detects (701) at least one second request for a turn to speak of higher priority before expiry of the said timeout, the said super-node device includes:

- means for releasing (704) the buffer memory; and
- means for notifying (705) the said terminal device that the turn to speak is denied to the said terminal device.

16. Super-node device (120) intended for managing turns to speak over a shared communication channel within the framework of half-duplex communications implemented in a communication network composed of a plurality of interconnected sub-networks (101; 102), each sub-network being associated with a super-node device (110; 120) of the communication network, **characterized in that**, when a first request for a turn to speak is received (306; 551) from a terminal device of a sub-network other than that with which the said super-node device is associated and the said super-node device is not aware of at least one second request for a turn to speak of higher priority, the said super-node device includes:

- means for transmitting (307; 555) a turn to speak pre-authorization notification message to each terminal device of the sub-network with which the super-node device is associated, so as to make each terminal device of the said sub-network listen to the shared communication channel;
- means for determining (309; 556) the duration of the timeout as a function of a law of distribution $f_\tau(t)$ of the time period between a release from speaking and a next turn to speak, and of a law of distribution $f_\delta(d)$ of network latency between an instant at which a request for a turn to speak is transmitted by a terminal device and an instant at which the said request is actually received by the said super-node device, so that the probability $P_{fail}$ of removing the said terminal device from the turn to speak is below a predefined threshold;
- means for storing (313; 557) in a buffer memory data propagated by another super-node device within the framework of the turn to speak;
- means for read-activating (319; 560) the buffer memory so as to disseminate the stored data to each terminal device listening on the sub-network associated with the said super-node device, when the said timeout has elapsed;

and **in that**, when the said super-node device detects (701) at least one second request for a turn to speak of higher priority before expiry of the said timeout, the said super-node device includes means for releasing (704) the buffer memory.

**17.** Super-node device (120) intended for managing turns to speak over a shared communication channel within the framework of half-duplex communications implemented in a communication network composed of a plurality of interconnected sub-networks (101; 102), the said super-node device being in accordance with Claims 15 and 16.

Fig. 1

Fig. 2

| 111 | 111a | 110 | 120 | 121a |

Fig. 3

| 111 | 111a | 110 | 120 | 121a |

Fig. 4

Réception d'une requête de prise de parole    501

Détermination de la priorité de ladite requête vis-à-vis d'éventuels autres requêtes concurrentes    502

504

Refus    non ← OK? oui
503

505    Propagation de ladite requête

Activation d'une temporisation de lecture d'une mémoire tampon    506

Activation d'une temporisation de pré-autorisation    507

non ← OK? oui
508

509    Notification locale

510    Pré-autorisation

511

Activation de la mémoire tampon en écriture et d'un mécanisme de propagation de données

non ← OK ? oui
512

513    Autorisation et notification locale

514    Activation de la mémoire tampon en lecture

Fig. 5A

Réception d'une requête de prise de parole ⟵ 551

Détermination de la priorité de ladite requête vis-à-vis d'éventuels autres requêtes concurrentes ⟵ 552

554

Refus ⟵ non ── OK? ── oui

553

Notification locale ── 555

Activation d'une temporisation de lecture d'une mémoire tampon ── 556

Activation de la mémoire tampon en écriture ⟵ 557

non ── OK? ── oui

558

Notification locale ── 559

Activation de la mémoire tampon en lecture ── 560

Fig. 5B

Réception d'un message de libération de parole  ⌇ 601

Propagation du message de libération de parole  ⌇ 602

Désactivation de la mémoire tampon en écriture et du mécanisme de propagation de données  ⌇ 603

non ⟨ Mémoire tampon vide ? ⟩ oui

604 ⌇

Libération de la mémoire tampon  ⌇ 605

Notification locale  ⌇ 606

Fig. 6A

Réception d'un message de libération de parole  ⌇ 651

Désactivation de la mémoire tampon en écriture et du mécanisme de propagation de données  ⌇ 652

non ⟨ Mémoire tampon vide ? ⟩ oui

653 ⌇

Libération de la mémoire tampon  ⌇ 654

Notification locale  ⌇ 655

Fig. 6B

Détection de conflit de requêtes de prise de parole ⌇ 701

non ⟨ Retrait de prise de parole? ⟩ oui

702

Désactivation de la mémoire tampon en écriture et, le cas échéant, du mécanisme de propagation de données ⌇ 704

Refus

703

Notification locale ⌇ 705

Transmission d'un message représentatif du conflit, si détection locale ⌇ 706

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2010261494 A1

• US 7684818 B1